# EUROPEAN PATENT SPECIFICATION

(11) **EP 4 252 461 B1**
(45) Date of publication and mention of the grant of the patent: **11.11.2026**
(21) Application number: 21830835.1
(22) Date of filing: 24.11.2021
(51) Int. Cl.: H04W 52/14, H04W 52/24, H04W 84/12, H04W 52/36

(54) **TRIGGER FRAME AND UORA TRIGGER ENHANCEMENTS FOR WLAN SYSTEM**
VERBESSERUNGEN AN TRIGGERRAHMEN UND UORA-TRIGGERN FÜR WLAN-SYSTEM
CADRE DE DÉCLENCHEMENT ET AMÉLIORATIONS DE DÉCLENCHEMENT D'UORA POUR SYSTÈME WLAN

(30) Priority: 24.11.2020 US 202063117833 P; 26.01.2021 US 202163141765 P; 25.02.2021 US 202163153691 P; 11.03.2021 US 202163159864 P; 25.03.2021 US 202163166061 P; 28.05.2021 US 202163194819 P; 21.06.2021 US 202163213068 P
(43) Date of publication of application: 04.10.2023
(60) Divisional application: 26210407.8
(73) Proprietor: InterDigital Patent Holdings, Inc., Wilmington, DE 19809 (US)
(72) Inventor: LOU, Hanqing, New York, New York 10120 (US); LIN, Zinan, New York, New York 10120 (US); WANG, Xiaofei, New York, New York 10120 (US); YANG, Rui, New York, New York 10120 (US); SUN, Li Hsiang, San Diego, California 92128 (US)
(74) Representative: AWA Sweden AB
(86) International application number: PCT/US2021/060791
(87) International publication number: WO 2022/115583

(56) References cited:
- MATTHEW FISCHER (BROADCOM INC): "CR-24235-24236-PSR-20-mhz-normalization", vol. 802.11ax, no. 3, 9 April 2020 (2020-04-09), pages 1 - 9, XP068167440, Retrieved from the Internet <URL:https://mentor.ieee.org/802.11/dcn/20/11-20-0529-03-00ax-cr-24235-24236-psr-20-mhz-normalization.docx> [retrieved on 20200409]
- HUAWEI ET AL: "Consideration on eRNTP of inter eNB CoMP", vol. RAN WG3, no. Santa Cruz, Spain; 20150420 - 20150424, 10 April 2015 (2015-04-10), XP050954261, Retrieved from the Internet <URL:http://www.3gpp.org/ftp/tsg_ran/WG3_Iu/TSGR3_87bis/Docs/> [retrieved on 20150410]

## Description

### CROSS-REFERENCE TO RELATED APPLICATIONS

This application claims the benefit of U.S. Provisional Application Nos., 63/117,833 filed November 24, 2020 ; 63/141/765 filed January 26, 2021 ; 63/153,691 filed February 25, 2021 ; 63/159 , 864 filed March 11, 2021 ; 63/166,061 filed March 25, 2021 ; 63/194 , 819 filed May 28, 2021 ; and 63/213 , 068 filed June 21, 2021 .

### BACKGROUND

A Wireless Local Area Network (WLAN) in Infrastructure Basic Service Set (BSS) mode may have an Access Point (AP) associated with the BSS and one or more stations (STAs) associated with the AP. The AP may have access to or interface with a Distribution System (DS) or another type of wired/wireless network that carries traffic in and out of the BSS. Traffic to STAs that originates from outside the BSS may arrive through the AP and be delivered to the STAs. Traffic originating from STAs to destinations outside the BSS may be sent to the AP to be delivered to the respective destinations. Traffic between STAs within the BSS may also be sent through the AP where the source STA sends traffic to the AP and the AP delivers the traffic to the destination STA.

Using an infrastructure mode of operation consistent with the Institute of Electrical and Electronics Engineers (IEEE) 802.11ac wireless networking protocols, the AP may transmit a beacon on a fixed channel, which may be, for example, the primary channel. This channel may be, for example, 20 MHz wide, and may be the operating channel of the BSS. This channel may also be used by the STAs to establish a connection with the AP. A fundamental channel access mechanism in an 802.11 system may be Carrier Sense Multiple Access with Collision Avoidance (CSMA/CA). In this mode of operation, every STA, including the AP, may sense the primary channel. If the channel is determined to be busy, the STA backs off. Hence, in some circumstances, only one STA may transmit at any given time in a given BSS.

Consistent with 802.11n, High Throughput (HT) STAs may also use a 40 MHz wide channel for communication. This may be achieved by combining the primary 20 MHz channel with an adjacent 20 MHz channel to form a 40 MHz wide contiguous channel.

Consistent with 802.11ac, Very High Throughput (VHT) STAs may support 20MHz, 40 MHz, 80 MHz, and 160 MHz wide channels. The 40 MHz, and 80 MHz, channels may be formed by combining contiguous 20 MHz channels as similarly described with regards to 802.11n described above. A 160 MHz channel may be formed either by combining 8 contiguous 20 MHz channels, or by combining two non-contiguous 80 MHz channels, and this may also be referred to as an 80+80 configuration. For the 80+80 configuration, the data, after channel encoding, may be passed through a segment parser that divides it into two streams. Inverse fast Fourier transform (IFFT) and time domain processing may be performed on each stream separately. The streams may then be mapped onto the two channels, and the data may be transmitted. At the receiver, this mechanism may be reversed, and the combined data may be sent to the Medium Access Control (MAC) sublayer.

To improve spectral efficiency, 802.11ac may support the concept of downlink MultiUser MIMO (MU-MIMO) transmission to multiple STA's in the timeframe of the same symbol, e.g. during a downlink OFDM symbol. The potential for the use of downlink MU-MIMO may also be supported by 802.11ah. It is important to note that since downlink MU-MIMO, as it is supported by 802.11ac, may use the same symbol timing for transmission to multiple STAs, interference of the waveform transmissions to multiple STAs is not an issue. However, because all STAs involved in MU-MIMO transmission with the AP must use the same channel or band, this may limit the operating bandwidth to the smallest channel bandwidth that is supported by the STAs the are included in the MU-MIMO transmissions from the AP.

MATTHEW FISCHER (BROADCOM INC): "CR-24235-24236-PSR-20-mhz-normalization", IEEE DRAFT; 11-20-0529-03-00AX-CR-24235-24236-PSR-20-MHZ-NORMALIZATION, IEEE-SA MENTOR, PISCATAWAY, NJ USA,vol. 802.11ax, no. 3 9 April 2020 (2020-04-09), pages 1-9, discloses transmit power control in spatial reuse by considering interferences.

### SUMMARY

A wireless station (STA) for parameterized spatial reuse (PSR) as defined by claim 1.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates backwards compatibility of an Aggregated Physical Layer Convergence Procedure (PLCP) Protocol Data Unit (A-PPDU) in accordance with embodiments disclosed herein;
FIG. 3 illustrates an example of an UL spatial reuse subfield format as may be supported by 802.11ax draft specifications;
FIG. 4 shows an example of pathloss on different links;
FIG. 5 illustrates an example of additional parameters signaled in a Trigger Frame;
FIG. 6 illustrates an example design of enhanced Uplink (UL) Orthogonal Frequency Division Multiple Access (OFDMA) Random Access (UORA) parameters conveyed using an existing UORA Parameter Set;
FIG. 7 illustrates an example design of the enhanced UORA parameters set;
FIG. 8 is an example of a User Info field with BW Restricted access indication;
FIG. 9 shows an example of UORA Resource Unit (RU) allocation with preamble puncturing;
FIG. 10 illustrates a scenario allocating UORA RUs in which the starting RU is RU78 (RU26+52) for an 80MHz channel;
FIG. 11 illustrates possible UORA RUs when the starting RU is RU132 (RU106+26) for an 80MHz channel;
FIG. 12 is a table illustrating an exemplary BW and BW Extension field design with punctured channel information;
FIG. 13 illustrates an example Trigger Frame according to embodiments disclosed herein;
FIG. 14 illustrates EOCWmin and EOCWmax configurations in an enhanced UORA Parameter Set Element;
FIG. 15 is a diagram illustrating an example of PSRR PPDU spatial reuse;
FIG. 16 is a diagram illustrating an example of a PSR transmission;
FIG. 17 is a diagram illustrating an example of a punctured channel with PSR
FIG. 18 is a table illustrating an exemplary expression of Ns in HE Trigger Frame;
FIG. 19 is a table showing an exemplary expression of Ns in an EHT Trigger Frame;
FIG. 20 illustrates an example of UL SR subfields of a Trigger Frame; and
FIG. 21 is an illustration of PSRR PPDU and PSRT PPDU according to embodiments disclosed herein;
FIG. 22 is an exemplary illustration of a PSRR PPDU and PSRT PPDU according to embodiments disclosed herein;
FIG. 23 is an exemplary illustration of a PSRR PPDU and PSRT PPDU according to embodiments disclosed herein;
FIG. 24 is an exemplary illustration comparing a PSRT PPDU BW to a PSRR PPDU BW according to embodiments disclosed herein;
FIG. 25 is an example illustration of PSR in an EHT trigger frame when a punctured channel is present in a common info field according to embodiments disclosed herein;
FIG. 26 depicts a first example scenario involving EHT PSRR PPDU spatial reuse;
FIG. 27 depicts a second example scenario involving EHT PSRR PPDU spatial reuse;
FIG. 28 depicts a third example scenario involving EHT PSRR PPDU spatial reuse;
FIG. 29 depicts a fourth example scenario involving EHT PSRR PPDU spatial reuse;

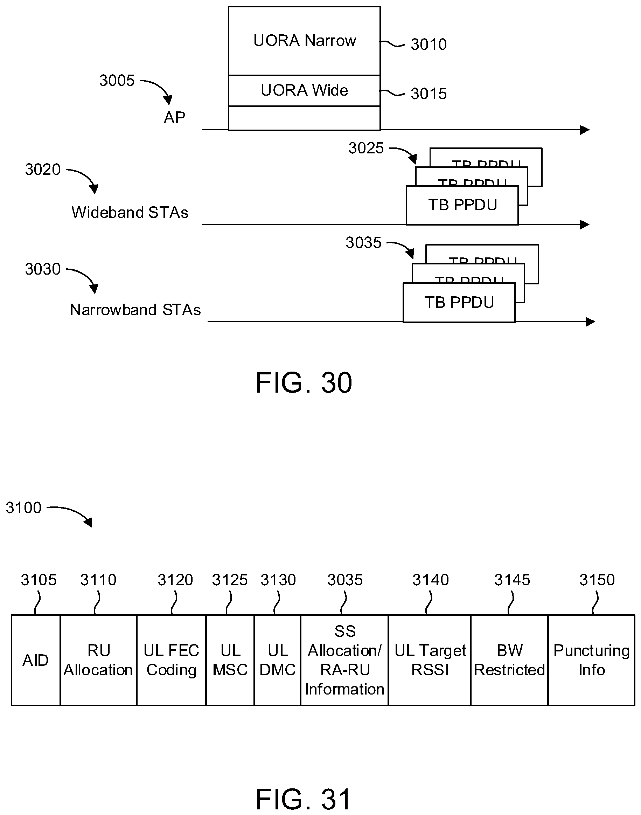

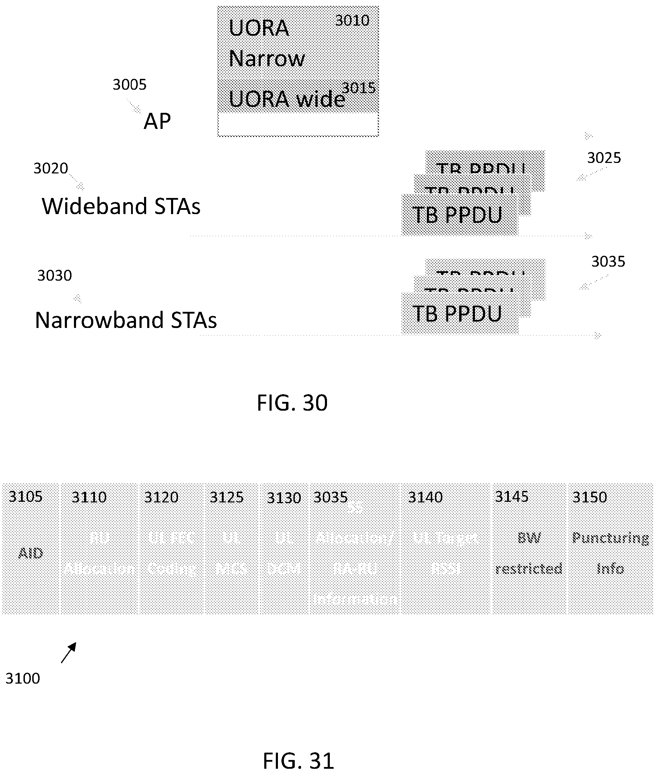

FIG. 30 is a transmit timing diagram according to embodiments disclosed herein;
FIG. 31 shows a trigger frame according to embodiments disclosed herein;
FIG. 32 is a flowchart illustrating a procedure for a STA to perform a Parameterized Spatial Reuse Transmission (PSRT) according to embodiments disclosed herein;
FIG. 33 is a flowchart illustrating a procedure for a STA to perform a Parameterized Spatial Reuse Transmission (PSRT) according to embodiments disclosed herein; and
FIG. 34 is a flowchart illustrating a procedure for a STA to perform a Parameterized Spatial Reuse Transmission (PSRT) according to embodiments disclosed herein.

### DETAILED DESCRIPTION

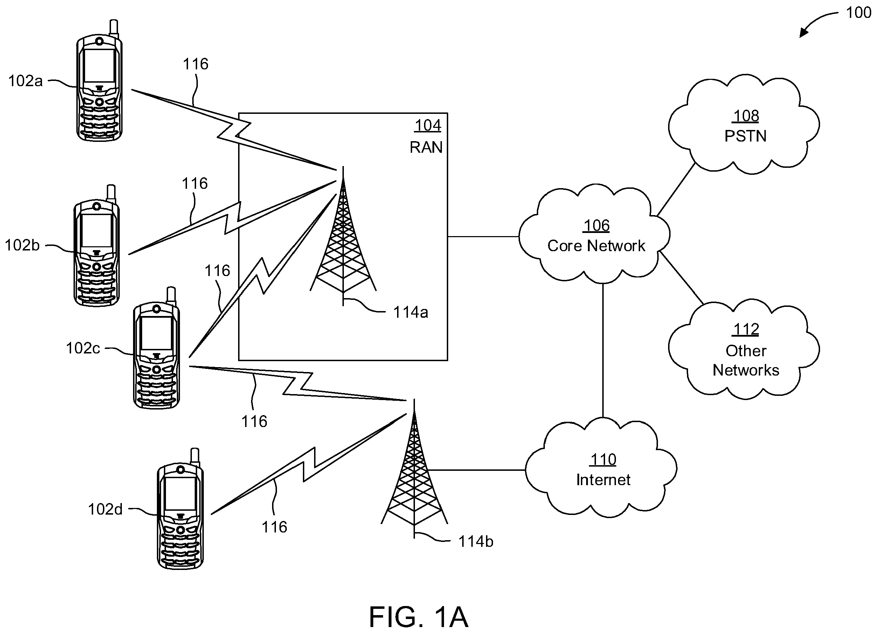

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using NR.

In an embodiment, the base station 114a and the WTRUs 102a, 102b, 102c may multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

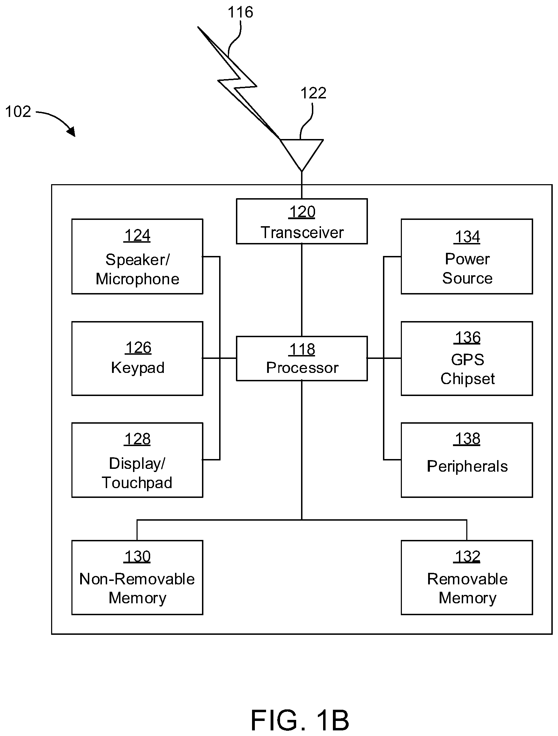

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

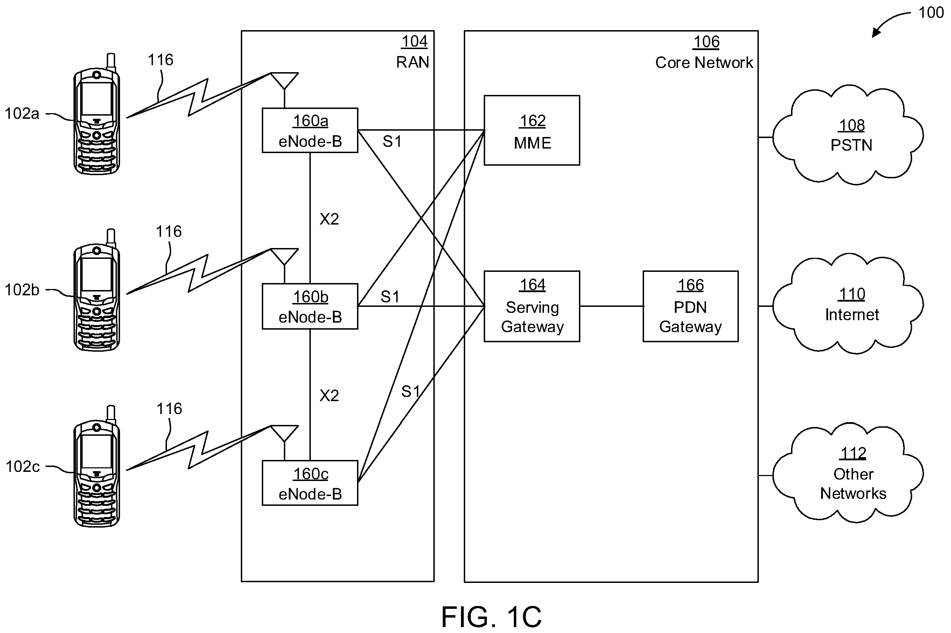

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

As used herein, parameterized spatial reuse (PSR) frames may be transmitted and received by STAs in the WLAN. The terminology PSR receiver (PSRR) and PSR transmitter (PSRT) may be used through this description and figures to indicate a transmission originating from a PSR receiver or a PSR transmitter.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

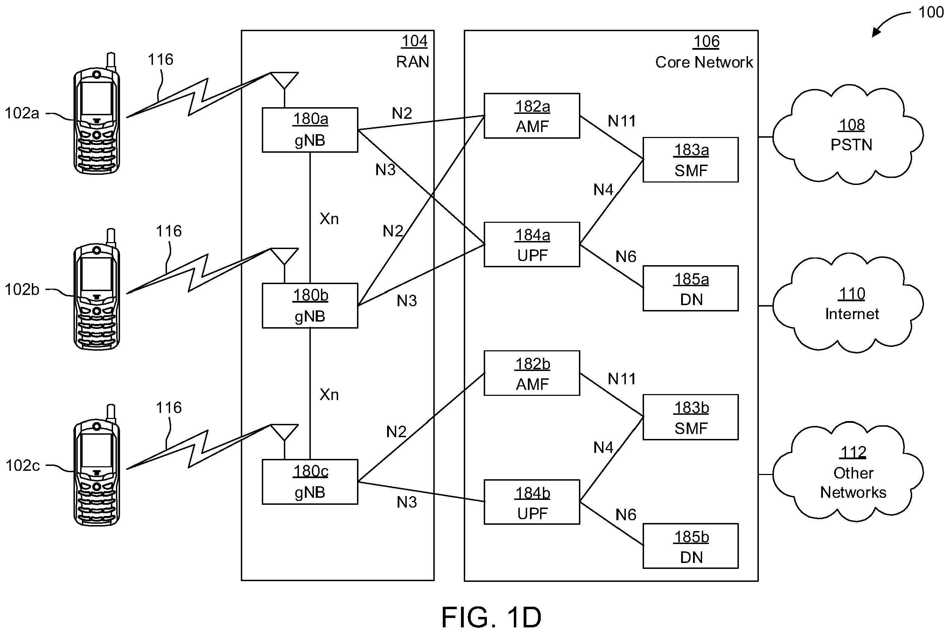

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGS. 1A-1D, and the corresponding description of FIGS. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The IEEE 802.11 Extremely High Throughput (EHT) Study Group was formed in September 2018. EHT is considered as the next major revision to IEEE 802.11 standards following 802.11ax, which is currently in the Working Group Letter Ballot Stage. The EHT Study Group is tasked with exploring the possibilities of further increasing peak throughput and improve efficiency of the IEEE 802.11 networks. Following the formation of the EHT Study Group, the 802.11be Task Group was established to provide for 802.11 EHT specifications. The primary use cases and applications addressed herein include high throughput and low latency applications such as: Video-over-WLAN; Augmented Reality (AR); and Virtual Reality (VR).

Various features may be useful in 802.11beicompliant networks to achieve the target of increased peak throughput and improved efficiency. These features may facilitate, for example, multi-AP capability; multi-band/multi-link capabilities; 320 MHz bandwidth;16 Spatial Streams; HARQ; AP Coordination, and new techniques for 6 GHz channel access, among other things.

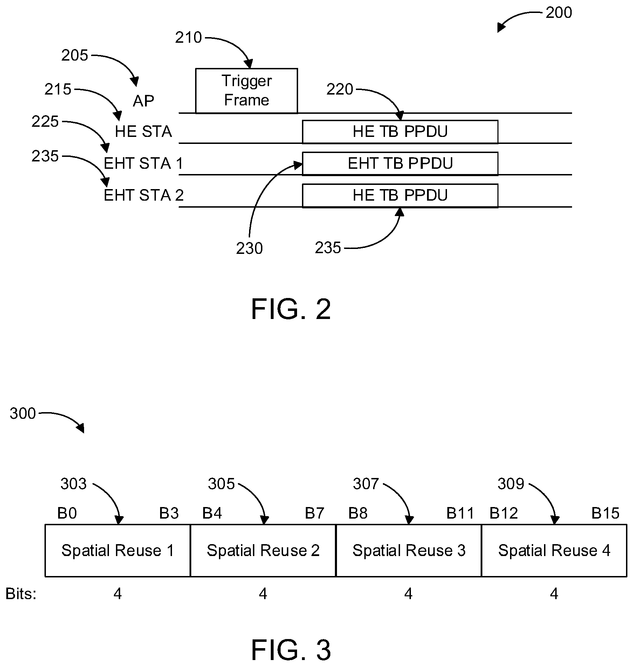

FIG. 2 illustrates a backwards compatible approach 200 for different capability STA to respond to a downlink (DL) trigger frame 210 from an AP 205, e.g., a trigger frame allocating resources for performing random access procedures, by the STA transmitting an uplink (UL) Aggregated Physical Layer Convergence Procedure (PLCP) Protocol Data Unit (A-PPDU) in one or more of the allocated resources. For example, an AP 205 transmits trigger frame 210 to three example STAs: an HE STA 215, a first 802.11be Extreme High Throughput (EHT) STA 225 and a second EHT STA 235, In accordance with trigger frame 210, example HE STA 215 transmits an uplink HE TB PPDU 220 to AP 205. In accordance with the same AP trigger frame 205, first EHT STA 225 transmits an EHT TB PPDU 230 to AP 205. In accordance with the same trigger frame 210, second EHT STA 235 transmits an HE TB PPDU 235 to AP 205.

An EHT STA may support greater bandwidth (BW), multiple RU allocation, enhanced MCS and greater number of spatial streams. Trigger frame (TF) design may need to be modified to signal the allocation from the AP for these enhanced features and to signal the new fields of U-SIG of the TB-PPDU. The RU allocation may be considered for inclusion in the trigger frame for the EHT-TB-PPDU.

An EHT STA may define frequency domain aggregation of aggregated PPDUs. An aggregated PPDU may consist of multiple PPDUs. The PPDU format combination may be limited to EHT and HE, though other combinations may be possible. For PPDUs using the HE format, the PPDU BW, and the number of PPDUs, is currently being considered. The A-PPDU may be implemented as an R2 feature.

An A-PPDU in UL from multiple STAs supporting different amendments, e.g., HE STA and an EHT STA may require a backwards-compatible trigger frame, as shown in FIG 2.

802.11be may also support Multi-link Operations (MLO), in which a STA may independently perform Enhanced Distributed Channel Access (EDCA) or triggered access on each link if it supports simultaneous transmission and reception (STR). Because of the use of independent access, in MLO, currently the implementation of Trigger Frames and MLO may be related to a Trigger Frame transmission or transmissions to a non-STR (NSTR) non-AP Multi-Link Device (MLD). For example,802.11be may support the following Trigger frame transmission rule in the MLO: An AP in the AP MLD shall not send a Trigger frame with the CS Required subfield set to 1 to a STA in a non-STR non-AP MLD, when at least one PPDU from other STAs affiliated to the same non-STR non-AP MLD is scheduled for transmission before (aSIFSTime + aSignalExtention - aRxTxTurnaroundTime) has expired after the PPDU containing the Trigger frame. In the above, aRxTxTurnaroundTime may be 4 µs. The ending time of a first PPDU that carries a frame soliciting an immediate response frame earlier by more than aRxTxTurnaroundTime of the ending time of a second PPDU containing a Trigger frame with the CS Required subfield set to 1. The AP STA may still follow the CS Required rule defined in 802.11ax.

802.11be may support the following Trigger frame transmission rule in the MLO in R1: when an AP MLD simultaneously triggers TB PPDUs from more than one STA affiliated with the same non-STR non-AP MLD and allows the frames in the TB PPDUs to solicit control response frames from the AP MLD, then the UL Length subfield values in the soliciting Trigger frames shall be set to the same value.

802.11be may support that the padding procedures of 802.11ax can be used when transmitting a Trigger frame to extend the frame length to meet the ending time requirement of the PPDU carrying the Trigger frame in the MLO.

802.11 specifications may support the use of a spatial reuse subfield. For instance, as is described in draft 8.0 of 802.11ax, the UL Spatial Reuse (SR) subfield of the Common Info field may carry values to be included in the Spatial Reuse fields in the HE-SIG-A field of solicited HE TB PPDUs.

FIG. 3 illustrates an example of an UL spatial reuse field format 300 as may be supported by 802.11ax draft specifications. As shown in FIG. 3, each Spatial Reuse field n, where 1 ≤ n ≤ 4, (indicated 303, 305, 307 and 309) may be set to the same value as its corresponding field in the HE-SIG-A field of the HE TB PPDU. Each Spatial Reuse field may be associated with a subchannel. For example, the system may be using 40, 80, 160, or 320 MHz channels. Each Spatial Reuse field may be associated with one or more 20 MHz channels that make up the larger system bandwidth. Additional fields of the HE-SIG-A field may be used alone or in conjunction with the Spatial Reuse fields to indicate the subchannels. An updated UL Spatial Reuse subfield may be supported for use in an 802.11be Trigger Frame. For example, UL Spatial Reuse fields in 802.11be Trigger Frames may contain two fields with 4 bits in each subfield.

One or more technical challenges or problems relating to the above concepts are described herein in conjunction with descriptions of technical solutions provided by the various embodiments disclosed herein. One problem may be how a Trigger Frame allocates UORA access to MLDs/STAs with a different number of enabled/active links.

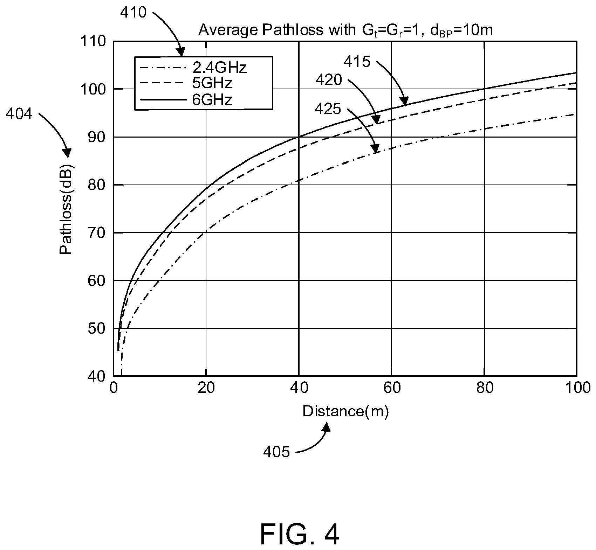

FIG. 4 is a graph 400 showing pathloss 404 over distance 405 for example links 410. Curve 415 represents a 6GHz link. Curve 420 represents a 5GHz link. Curve 425 represents a 2.4 GHz link. Due to different pathloss on different bands, as illustrated in FIG. 4, a non-AP MLD (possibly at BSS edge) may not have access on certain (high pathloss) links, i.e. these links may not be setup, may be disabled, may be in doze state, or a combination of these circumstances may apply. The non-ay only have UORA access on few active (i.e., low pathloss) links. Another non-AP MLD (possibly at BSS center) may have UORA access on more links. The non-AP MLD with greater UORA access may have more opportunities for UORA access than a non-AP MLD/non-AP STA with fewer links. An AP MLD may need to control the UORA resource in a common link for fairness between non-AP MLDs with multiple links (at BSS center), non-AP MLDs with a single link (at BSS edge) and legacy STAs.

Another problem may be how to provide enhanced UORA procedures. Uplink OFDMA-based random access (UORA) may be defined for 802.11ax devices. The UORA operation may be further expanded for 802.11be devices and beyond. In 802.11ax specifications, each STA may only attempt to access one RU that is allocated for random access. The issue, therefore, may be how to define procedures and protocols that can enable more efficient random access and may provide differentiated behavior for different classes of devices or devices with different load.

Another problem may be how to perform UORA triggering of STAs with mixed BW capabilities. With wideband operation, e.g., with bandwidth 160MHz or 320MHz, a STA, e.g., an AP, may transmit a Trigger frame to trigger a transmission over one or more resource units. However, a non-AP STA may support transmission on a narrower bandwidth, e.g., 80MHz bandwidth, due to its capability. In this case, the STA may park on the one 80MHz segment, such as a primary 80MHz segment or secondary, third, fourth 80MHz segments. Here we may use the terminology 80MHz subchannel and 80MHz segment interchangeably. The narrow bandwidth capable STA may be able to access UORA resources on one 80MHz segment but not the whole set of resources. Thus, comparing with the wideband capable STAs, the narrowband STAs may have less chance to successfully respond an UORA trigger.

Another problem may be how to transmit a UORA Trigger with mixed PHY version. An A-PPDU transmission as proposed for 802.11be may allow different PHY version STAs to share the wideband transmissions. For example, an AP may acquire 160MHz channel, and it may transmit to an 802.11ax STA and an 802.11be STA concurrently. Then, the AP may transmit to the 802.11ax STA using the primary 80MHz segment with a HE PPDU and to the 802.11be STA using the secondary 80MHz segment with an EHT PPDU. The two PPDUs may be well synchronized and the transmission may be referred as A-PPDU transmission. The similar scheme may be applied to uplink transmission. A trigger frame may be designed to trigger uplink A-PPDU transmissions.

Another problem may be how to restrict UORA access. A UORA transmission may be open to all the STAs to randomly select a resource to perform OFDMA based uplink transmission. However, not all STAs may be equal in terms their chances to successfully contend for the UORA resources. It may be beneficial to have a channel access scheme that may distribute the UORA based on mixed STA capabilities.

Another problem may be spatial reuse. Multiple problems may arise with respect to spatial reuse when 802.11 technologies are used according to current specifications. For example, a calculation of the interference level defined 802.11 specifications, such as in PSR_INPUT, Eqn. (26-7) of the current specs of 802.11ax, may not be consistent with the Parameterized Spatial Reuse (PSR) definition, which may be provide that PSR is implemented per subfield.

Existing draft specifications and proposals for 802.11 (e.g., 802.11ax) may not provide a clear definition of the transmit power upper bound if the PSR setup in a Trigger Frame is different in different subfields. For example, an *UL Target Receive Power* in the user info subfield of the trigger frame, which may be used to compute the PSR value, may be different among different users. Therefore, there may be a need to define the maximum allowable transmit power at the STA side when the STA receives a Trigger Frame in which the values of multiple UL SR subfields are not the same.

When a punctured channel is present in a trigger frame, the upper bound on the transmit power of PSRT PPDU defined in current 802.11 specifications, such as 802.11ax, may not be useable in EHT.

When a punctured channel is presented in an EHT trigger frame, it may not be defined how to make the PSR subfields in the Special User Info field consistent with the PSR subfields of the Common Info field. Furthermore, it may be redundant to have PSR subfields in the Common Info field and Special User Info field of an EHT trigger frame.

When a punctured channel is present in a trigger frame or any PPDU with PD enabled, an EHT STA may adjust the OBSS PD level in conjunction with adjusting its transmit power with a new definition.

In existing 802.11 specifications, such as 802.11ax, there may be no discussion of or solutions for how an EHT STA may make good use of PSR opportunities when EHT PSRR PPDUs or HE PSRR PPDUs are transmitted. Therefore, there may be a need to define the EHT STA behavior when PSR opportunities are provided by either EHT or HE OBSS APs.

Various embodiments implementing features or combinations of features to solve one or more of the above-described problems are described herein.

In some embodiments, UORA triggering of STAs with multilink capabilities is provided. A non-AP MLD that is eligible for UORA on multiple links may be required to not participate in UORA access or be required to participate in UORA access with reduced or increased probability on some of the links. This may be referred to as restriction of UORA access on some of the links. An AP MLD may signal this restriction in a broadcast signaling on a link that has restriction UORA access, without restricted UORA access, on all links of the AP MLD, or on a link or links that all designated or eligible non-AP MLDs have access. An AP MLD may signal this restriction in a unicast signaling in any link which is enabled or active for the non-AP MLD.

The set of links that a non-AP MLD eligible for UORA access in the following discussions may be limited such that the set only contains the links that are active (or awake) and/or mapped to the TID that the non-AP MLD wishes to transmit.

In addition to the OCW (OFDMA contention window) range used in 11ax, additional parameters may be signaled to provide more or less UORA opportunities on some link or links in a set if the non-AP MLD is eligible for UORA on the set of links. For example, the additional parameters P may be indexed as P(L, S), in which L is the link identity of a link for UORA access and S is an active link or set of active links eligible for UORA access. The parameters P (L, S) may be different for different L and S. P (L, S) is described in greater detail in following paragraphs below.

The set of links for which the non-AP MLD is eligible for UORA access for a TID may be smaller than the set of links for which the non-AP MLD is eligible for UORA access. This may be due to the TID mapping to a smaller number of links. For example, a TID x may only mapped to link A while the whole set of links for which the non-AP MLD is eligible for UORA access is {A, B}. In this case, the additional parameters for restricting UORA access on link A may not apply, or the set S may only contain the links the TID is mapped to, for preventing the delay of the traffic from this TID. Alternatively, or additionally, the additional parameters for restricting UORA access on link A may still be applied by considering S as the set of all active links eligible for UORA access for any TID, while the non-AP MLD signals the BSR of TID x on other links via UORA access to prompt AP MLD to perform non-UORA trigger based access on link A for TID x. When a non-AP MLD wishes to perform UORA access with an AMPDU containing multiple TIDs on link A, e.g. TID x may be mapped to link A, B, TID y may be mapped to link A, C, and then the non-AP MLD may use the most/least aggressive parameters P(A,{A,B}) or P(A, {A,C}) to perform UORA access on link A.

A TID/AC with a low latency requirement may be exempt from using the additional parameter for UORA access. A signaling message for informing a STA to transition to awake state from doze state on a link may be exempt from using the additional parameters for UORA access on that link.

Additional parameters for UORA access restriction are described herein. In some examples, the additional parameter may be a per link offset that is added to the OBO (OFDMA Back-Off) counter variable to become OBO_i, where i may be a link index. A non-AP STA may determine whether OBO_i is not greater than the number of eligible RA-RUs allocated by the Trigger Frame of this link. If yes, then the non-AP MLD may perform UORA access on this link. If no, the OBO counter cremented by max(0, number of eligible RA-RU - per-link offset). If a per-link offset is set to be greater than the number of eligible RA-RU on that link, the UORA access may be effectively disabled on that link.

In some examples, the additional parameter may be a per-link scaling factor that may be applied to the OBO counter variable (possibly with an additional floor or ceiling operation after multiplying the scaling factor) to become OBO_i. A non-AP STA may determine whether OBO_i is not greater than the number of eligible RA-RUs allocated by the Trigger Frame of this link. If yes, then the non-AP MLD may perform UORA access on this link. If no, the OBO counter may be decremented by f(number of eligible RA-RU /scaling factor). The variable f may be a ceiling or a floor. If scaling factor is set to a value representing infinity, the UORA access may be effectively disabled on that link. Alternatively, or additionally, the scaling/offset may be applied to the number of RA-RUs of a link instead of being applied on the OBO counter.

In some examples, the additional parameters/requirements may be an alternative per-link OCW range, which may be different from the normal OCW range (used by 11ax STAs) advertised on that link. The additional parameters/requirements may be used to enable/encourage UROA access in a subset of the links and disable/discourage UORA access in the rest of the links.

The value of the additional parameters/requirements may be different based on the set of links eligible for UORA access. For example, if only one link is available for UORA access, the scaling factor to OBO counter may be 1. If two links are available for UORA access, the scaling factor for high pathloss or unreliable link may be 1, while the scaling factor to OBO counter for the low pathloss link or reliable link may be a larger value greater than 1. In this example, per link pathloss or link reliability may be used as the additional parameters/requirements. For example, the AP MLD may advertise the per-link pathloss requirement for UORA access (and/or other types of access) in an element or a ML element. A non-AP MLD may measure/estimate the per-link pathloss between the non-AP MLD and the AP MLD on each link. If the measured/estimated pathloss on Link k may satisfy the requirement, then the non-AP STA affiliated with the non-AP MLD may be allowed or encouraged to access on the link.

The additional parameters/requirements may be signaled in a broadcast message, which may contain a field or element for parameters/requirements for all links. The additional parameters may be signaled in a unicast message, which may only signal the additional parameters related to the link receiving the unicast message. The unicast message may be a TF.

The additional parameters/requirements P(L,S) may be signaled as follows: for each different set of eligible links for UORA, S, additional parameters/requirements may be provided for each link L in the set S. The non-AP may apply the additional parameters P(L,S) for UORA on link L a set of links eligible for UORA access that is S. In one embodiment, S may be all of the available links. An additional parameter/requirement that causes UORA behavior to be the same as legacy behavior may be omitted.

The AP MLD may signal criteria for a non-AP MLD to determine the links eligible for UORA access. For example, the AP MLD may signal a target receive power and/or MCS/RA-RU size, and/or a tx power for a PPDU used for estimate pathloss.

The AP MLD may signal a timer duration. Within the duration after a UORA procedure on a link, the link may be considered eligible for UORA access for a STA. In some cases, the UORA procedure may involve the STA receiving a Trigger Frame on the link assigning RA-RUs eligible for UORA access. In some cases, the UORA procedure may involve the STA receiving a Trigger Frame on the link assigning RA-RUs eligible for UORA access and the STA may respond to the Trigger Frame. In some cases, the UORA procedure may involve the STA transmitting a TB-PPDU on a RA-RU on the link. In some cases, the UORA procedure may involve the STA transmitting a TB-PPDU on a RA-RU on the link and the TB-PPDU may be acknowledged.

The non-AP STA on the link may be assigned a broadcast TWT which utilizes RA-RU (e.g. a trigger-enabled announced broadcast TWT with broadcast TWT recommendation=2). The non-AP STA on a link may consider itself eligible for UORA access on that link if some or all of the above conditions are satisfied.

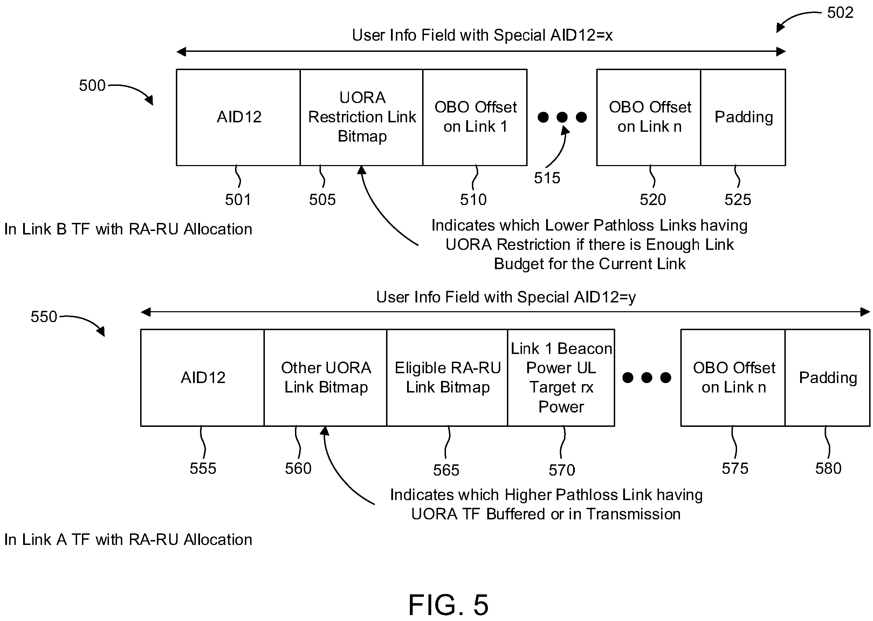

FIG. 5 illustrates examples of additional parameters signaled in two example instances 500, 550 of a User Info field of a Trigger Frame. There may be two links, e.g., link A and link B. Link A may have low pathloss and link B may have higher pathloss. In a Trigger Frame transmitted on link B, the AID12 (501) of a User Info field 500 may be set to a special value x to identify the User Info field 500 is used to send additional parameters for UORA in a particular format. In such cases, there may be indicated, e.g., at 505, a bitmap or a list of link IDs indicating which link of the AP-MLD has additional parameters to adjust UORA access on that link, if any RA-RU or RA-RUs allocated in the current Trigger Frame is or are considered eligible. This may be possible for a certain duration (which may also be signaled in the Trigger Frame), and if any of those links indicated by the bitmap (e.g. link A) has a Trigger Frame for UORA access, then the additional parameter for that link signaled in this field may apply. For example, an offset to the OBO counter 575, on link A to reduce the UORA access probability on that link may apply. In some examples, the additional parameters may be only applicable to the TIDs mapped to both link A and link B.

In a Trigger Frame transmitted on link B, the AID12 (555) of a User Info field 550 may be set to a special value y to identify the field in the Trigger Frame used to send additional parameters for UORA in a particular format. In such examples, there may be a bitmap 560 indicating a link ID of that may have pending Trigger Frame allocating UORA access, and/or parameters for the non-AP MLDs to estimate whether they are eligible for the RA-RU or RA-RUs assigned in the pending Trigger Frame or Trigger Frames. For example, a beacon power on that link may be indicated, e.g., by 570 and used to estimate pathloss, and/or a target UL receive power for the RA-RU or RA-RUs on that link may be used to estimate the eligibility of the RA-RU based on the estimated pathloss. If the non-AP MLD is eligible for the pending RA-RU(s), it may apply the additional parameter to adjust UORA access on the current link A, e.g. a factor to reduce the number of eligible RA-RU assigned in the current TF.

Solutions implementing a single/common OBO/OCW variable are described herein. A single OBO counter and/or OCW variables may be used for a non-AP MLD to perform UORA access. In such methods, the common OBO counter may be decremented by the number of eligible RA-RUs allocated by Trigger Frames (TF) sent on any active link of the non-AP MLD, possibly using the modified procedure described in paragraphs above.

The common UORA parameters set (e.g. a common OCW range) may be signaled as a common parameter of the AP MLD, for example, in a multi-link element. Based on the success or failure of the UORA transmission, the common OCW may be updated based on the common UORA parameters (e.g. reset OCW to OCW_min, double the current OCW, or maintain OCW as OCW_max), and the common OBO counter may be regenerated based on the updated common OCW.

If TFs on multiple links are aligned or overlapped in time (e.g. at the end of a PPDU alignment), the procedures of comparing (adjusted) OBO counter variable not greater than the (adjusted) number of eligible RA-RUs may be performed in one operation. For example, if Trigger Frames on several links are aligned, then the single OBO counter is compared to the sum of adjusted (e.g. by per-link offset or scaling) eligible RA-RUs of all links on which TFs with RA-RU allocation are received. If the OBO counter is not greater than the sum, then the non-AP MLD may decide the probability of UORA access on a link based on the percentage of adjusted eligible RA-RUs of that link over the sum. Based on the probability of each link, the non-AP MLD may determine which link to use to perform UORA access.

Solutions implementing one or more per-link OBO/OCW variables are described herein. In such solutions, per-link OBO counter/OCW variables may be used for a non-AP MLD to perform UORA. This may be equivalent to multiple instances of the 11ax UORA per link. In these methods, the per-link OBO counter may be decremented by the number of eligible RA-RUs allocated by Trigger Frames (TF) sent on that link of the non-AP MLD, for example using a modified procedure as described in paragraphs above.

Based on the success or failure of the UORA transmission, the per-link OCW may be sed on the alternative OCW range parameter described, for example, in paragraph [0097] above (e.g. reset OCW to alternative OCW_min, double the current OCW, or maintain OCW as alternative OCW_max), and the per-link OBO counter is regenerated based on the updated per-link OCW.

If TFs on multiple links are aligned or overlapped in time (e.g. end of PPDU alignment), the procedures of comparing (adjusted) OBO counter variable not greater than the (adjusted) number of eligible RA-RUs may be performed on each link. If more than 1 link satisfying the criteria (countdown 0 links), the non-AP MLD may choose only 1 link to perform UORA access. The choice may be random, or may be based on the number of RA-RUs of the countdown 0 links, or may be based on UORA adjustment on the countdown 0 links (e.g. transmitting on the link without reduction of eligible RA-RUs and silent on the link with reduction of eligible RA-RUs)

Solutions directed to enhanced UORA procedures are described herein. Some solutions may implement, for example, an enhanced UORA Parameters Distribution Procedure. An AP may determine enhanced UORA parameters for one or more classes of its associated STAs, for all its associated STAs, or for any unassociated STAs that wish to exchange frames with the AP.

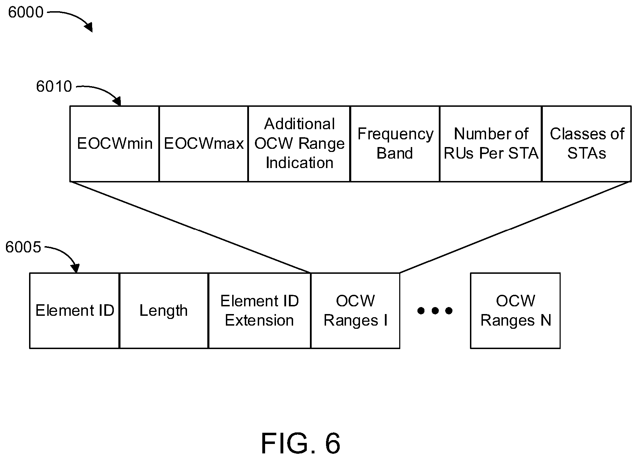

FIG. 6 illustrates an example design 6000 of enhanced UORA parameters 6010 conveyed using an UORA Parameter Set 6005. It should be appreciated that the enhanced UORA parameters may be conveyed in any management, control, data or other type of frames, action frames, in MAC or PHY headers, or embedded in any fields.

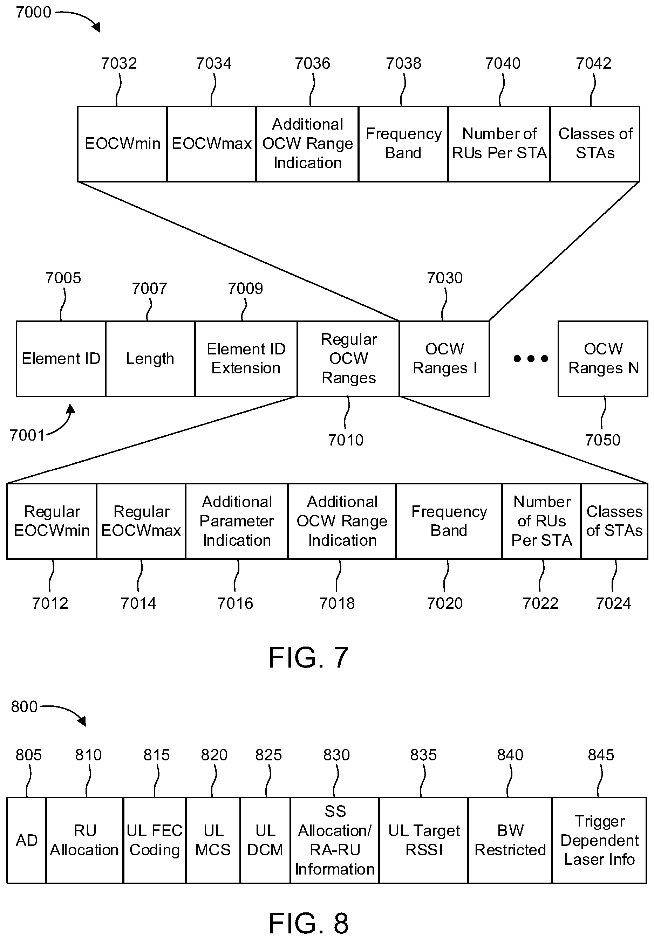

FIG. 7 illustrates an example design of the enhanced UORA parameters set 7000. An enhanced UORA parameter set 7000 may include one or more of the following fields: An Element ID 7005, Length 7007, and/or an Element ID Extension 7009. The combination of Element ID 7005 and Element ID Extension 7009 may identify the current element as the UORA Parameter Set element in the event the Enhanced UORA Parameter set is designed using the existing UORA Parameter Set. The Length field 7007 may indicate the length of the UORA Parameter Set. A receiving STA that is capable of detecting enhanced UORA element 7000 may be able to determine that the UORA Parameter set contains enhanced UORA parameter sets since the length field 7007 indicates that the UORA parameter set contains additional information than just an 8-bit OCW Range field. The combination of Element ID 7005 and Element ID Extension 7009 may identify the current element 6000 as the enhanced UORA Parameter Set element in the event the Enhanced UORA Parameter set is designed as a new element.

The enhanced UORA parameter set 7000 may include a Regular OCW Ranges field 7010. This field 7010 may contain the backwards compatible signaling for OCW ranges for legacy STAs, e.g., 11ax devices, and may contain one or more subfields (7012-7024. For example, the CW Ranges field 7010 may contain a Regular EOCWmin subfield 7012. This subfield may indicate an exponent to be used by legacy STAs or other classes of STAs to determine the minimum value of OCW for the initial HE TB PPDU transmission using UORA. The Regular OCW Ranges field 7010 may contain a Regular EOCWmax subfield 7014. This field may indicate an exponent to be used by legacy STAs or other classes of STAs to determine the maximum value of OCW using UORA.

Two reserved bits in the regular OCW Range may be used to indicate information. For example, the Regular OCW Ranges field 7010 may contain -Additional information subfields, e.g., 7012-7024. These subfields may use one or more bits to indicate additional information for STAs that can understand the additional information, such as frequency band 7020, Number of RUs per STA 7022, and/or classes of STAs 7024 that this regular OCW Range field 7010 applies to. When the enhanced UORA parameter set 7000 is designed using the existing UORA parameter set element, the parameters included in the backwards compatible regular OCW Range field 7010 always applies to legacy devices such as 802.11ax devices. Additional classes of STAs may be indicated to use the parameters indicated in the regular OCW range field 7010. The Frequency band indicated in frequency band subfield 7020 for the regular OCW Range field 7010 may be the primary 20 MHz, primary 40 MHz, primary 80 MHz, primary 160 MHz channel depending on the operating channels of the AP, or specific 20 MHz channel channels for 20 MHz channel-only devices.

The Regular OCW Ranges field 7010 may contain an Additional OCW Ranges available subfield 6018. This may indicate that additional OCW ranges 7030-7050 may be available, for example, for other frequency bands, or for other classes of STAs such as 802.11be devices, following the Regular OCW Range field 7010.

The Regular OCW Ranges field 7010 may contain a Number of RUs per STA subfield 7022. This indication may specify the number of RUs a STA or the specified STAs may be able to attempt to access. The default value may be 1. Additionally, or alternatively, this indication may specify the number of RUs per Frequency Band a STA may attempt to access using OFDMA-based random access. For example, if the frequency band subfield 7020 indicates the frequency band is the 80 MHz band, then a number of 4 in the number of RUs per STA subfield 7022 means that the STA may be allowed to conduct random access for 1 RU per 20 MHz subchannel.

The Enhanced UORA Parameter Set 7000 may include an OCW Ranges field 1-N (7030-7050). There may be N additional OCW ranges fields with each field specifying an additional OCW field, and this field may contain the OCW ranges for classes or all STAs, for one or more frequency bands and may contain one or more subfields. For example, OCW Ranges field 1 is representative and may contain an EOCWmin subfield 7032. This field may indicate an exponent to be used by STAs or other classes of STAs to determine the minimum value of OCW for the initial TB smission using UORA.

Representative OCW Ranges field 1 may include an EOCWmax subfield 7034. This field may indicate an exponent used by STAs or other classes of STAs to determine the maximum value of OCW using UORA.

Representative OCW Ranges field 1 may include an Additional OCW Ranges available subfield 7036. This may indicate that additional OCW ranges may be available, for example, for other frequency bands, or for other classes of STAs following the current OCW Range field.

Representative OCW Ranges field 1 may include a Number of RUs per STA subfield 6040. This field may contain an indication that may specify the number of RUs a STA or the specified STAs may be able to attempt to access. The default value may be 1. Additionally, or alternatively, this indication may specify the number of RUs per Frequency Band a STA may attempt to access using OFDMA-based random access. For example, if the frequency band is 80 MHz band, then a number of 4 may mean that the STA is allowed to conduct random access for 1 RU per 20 MHz subchannel.

Representative OCW Ranges field 1 may include a Classes of STAs subfield 7042. This subfield may indicate the classes of STAs for which the parameters indicated in the current OCW range field applies. For example, classes of STAs may include Low Latency STAs (STAs that have current low latency traffic buffered), associated STAs, unassociated STAs, TDLS STAs, 11be STAs, 11ax STAs, or any future generations of devices beyond 802.11be devices.

Representative OCW Ranges field 1 may include a Frequency band subfield 7038. This subfield may indicate the frequency for which the parameters included in the current OCW Range field 7030 applies. It may indicate any 20 MHz, 40 MHz, 80 MHz, 160 MHz or 320 MHz channel depending on the operating channels of the AP, or specific 20 MHz channel channels for 20 MHz channel-only devices.

Number of RUs per STA subfield 7040 may specify the number of RUs a STA or the specified STAs may be able to attempt to access. The default value may be 1. Additionally, or alternatively, this indication may specify the number of RUs per Frequency Band a STA may attempt to access using OFDMA-based random access. For example, if the frequency band is 80 MHz band, then a number of 4 may mean that the STA is allowed to conduct random access for 1 RU per 20 MHz subchannel.

Solutions implementing enhanced UORA procedures are described herein. The enhanced UORA procedures may be as follows: An AP, e.g., an EHT AP, may advertise enhanced UORA parameter sets using either an existing UORA Parameter Set element or a new element, which may be included in any management, control, data, action frames, or in MAC or PHY headers. For example, the element may be included in beacons, probe responses, association responses, short ILS Discovery frames, or other type of frames. The enhanced UORA parameter sets may also be indicated in a trigger frame, or in combination of one or more fields or subfields of a trigger frame.

A STA receiving the enhanced UORA parameter sets 6000 may interpret the UORA parameters and identify its own class, using the enhanced UORA parameters in the frequency bands as indicated in the associated Regular OCW Range 6010, or any OCW Range fields 6030 to 6050. The STA may attempt to access more than one RU if the Number of RUs per STA field 6040 or fields indicate a number that is larger than 1, which may be for one or more frequency channels or bands.

Embodiments directed to UORA triggering of STAs with mixed BW capabilities are described herein. In some embodiments, it may be assumed that an AP may operate a BSS with wide operating bandwidth. The STAs associated with the AP may have different capabilities regarding their own supported bandwidth. Some STAs may support the operating bandwidth the AP announced, and some STAs may support narrower bandwidth.

Some solutions may implement a per-segment UORA trigger rule. For example, in some methods, the location of the segment that carries the Trigger frame and/or the location of allocated resources for random access may determine which STAs may respond implicitly. The terms segment or frequency segment to refer a frequency unit, which may be 80MHz subchannel, 20MHz subchannel or subchannels with other bandwidth resolutions.

In some methods, a UORA Trigger frame transmitted on Segment A may allocate one or more resource units on Segment A for random access.

In some methods, all STAs that may detect the UORA Trigger frame may respond. STAs that may not park on Segment A or may not detect the UORA Trigger frame may not respond.

In some methods, the STAs that may detect the UORA Trigger frame may have different receive capabilities. STAs that have narrow band capability, e.g., may be able to operate on one segment, may be able to access the UORA resources. STAs that have wide band capability, e.g., may be able to operate on more than one segment, may be able to access the UORA resources with some restrictions. Further details regarding such methods may be described in further detail in following paragraphs below.

In some methods, a UORA Trigger frame transmitted on Segment A may allocate one or more resource units on Segment B for random access. Here Segment A may not be the same as Segment B. As an example, a STA that may park on Segment A and B originally and thus may detect the UORA Trigger frame, may be allowed to access Segment B.

In another example, a STA that may park on Segment A but not Segment B and thus may detect the UORA Trigger frame, may switch to Segment B and response on Segment B. The ger frame transmitted on Segment A may be appended with dummy fields to allow STAs enough time to switch from Segment A to Segment B. In one example, a special AID value may be used to indicate the dummy padding fields for 802.11be STAs.

In another example, a STA that may park on Segment A but not Segment B, and thus may detect the UORA Trigger frame, may not respond the UORA Trigger. In this method, the UORA Trigger dummy padding may not be needed.

In another example, a STA that may be capable of operating on more than one segment and may detect the UORA Trigger frame may be allowed to access Segment B with restricted UORA access. The detailed definition of restricted UORA access may be provided in following paragraphs below. In some circumstances, the STAs may not allowed to access the UORA resources and may need to be triggered later.

In some methods, an UORA Trigger frame transmitted on Segment A may allocate one or more resource units on Segment A and B for random access. Here, Segment A may not be the same as Segment B. In some examples, an allocated RU may be cross the boundary of Segment A and B. In some examples, STAs that satisfy all or one or more of the following criteria may respond. The criteria may be that the STA may park on Segment A, that the STA may detect the Trigger frame; or that the STA may be able to operate on a bandwidth which is equal to or greater than the RU bandwidth.

Solutions implementing trigger frame designs with BW-mixed STAs are described herein. Some of the rules mentioned before may be configurable. A STA, e.g., an AP STA, may explicitly signal the configuration in a Trigger Frame and/or Beacon frame based some conditions such as channel usage, traffic load in the BSS etc.

In some methods, one or more bits in a Trigger frame may be used to indicate one or more access restrictions for the allocated RUs. In this disclosure, the term BW Restricted field/subfield may be used to refer to these restrictions. The bit or bits may indicate if all STAs that receive the Trigger frame may contend for an RA RU. The bit or bits may indicate if STAs that receive the Trigger frame and/or have wideband capability may contend for an RA RU. The bit or bits may indicate if all STAs that receive the Trigger frame and/or have narrowband capability may contend for an RA RU. The bit or bits may indicate if restricted UORA access may be applied to all STAs. The bit or bits may indicate if restricted UORA access may be applied to wideband capable STAs. The bit or bits may indicate if restricted UORA access may be applied to narrowband capable STAs. The bit or bits may be defined within a User Info field and thus it may be applied to the RUs allocated in the User info field.

The terms wideband capable and narrowband capable may have clear definitions. le, if a STA can operate over a bandwidth threshold, it may be considered a wideband capable STA; otherwise it may be considered a narrowband capable STA. In some examples, the bandwidth threshold may be 80MHz, 40MHz, 20MHz or 160MHz.

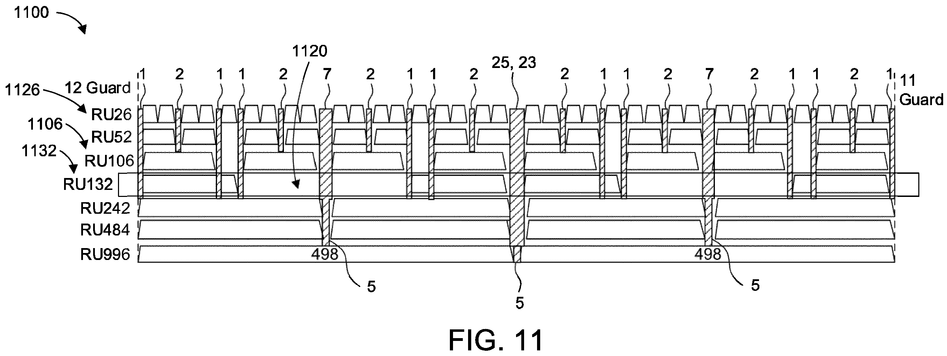

The bit or bits mentioned above may be carried in User Info field related to EHT or EHT + part. In one example, a Trigger frame may be used to trigger UORA transmission from STAs of mixed bandwidth capability. The Trigger frame may use a format similar to that defined in 11ax. For example, the frame may carry a Common Info field and User Info field. In some cases, a User Info field with special AID may be used to allocate resources for UORA access. An exemplary design of User Info field is given in FIG. 11.

FIG. 8 is an example of a trigger frame User Info field 800 with BW Restricted access indication 840.

The design of the Trigger frame 800 may follow the 11ax design with several changes. For the AID field 805, a special reserved AID value may be used to indicate the allocated RUs are for 11be STA UORA access. For the RU allocation field 810, this field may be modified to enable multiple RU aggregation. When the AID indicates UORA access for 11be STA, the field 805 may indicate the starting RU or RU combinations for UORA access. For the RA-RU info field 830, some bits in the RA-RU info field may be used to indicate the number of RU or RU combinations allocated by this User Info field. Alternatively, or additionally, some bits in the RA-RU info field may be used to indicate the number of RU or RU combinations allocated by this User Info field within a segment.

In some solutions, if the RU allocation field 830 indicates the starting RU is a single RU, then the allocated RUs for UORA access may be the contiguous RUs with the same size as the starting RU. In the case channel puncturing or preamble puncturing, i.e., one or more subchannel may be silenced during the transmission, the allocated RUs may be the contiguous RUs except non-existing RU or RUs and/or punctured RU or RUs.

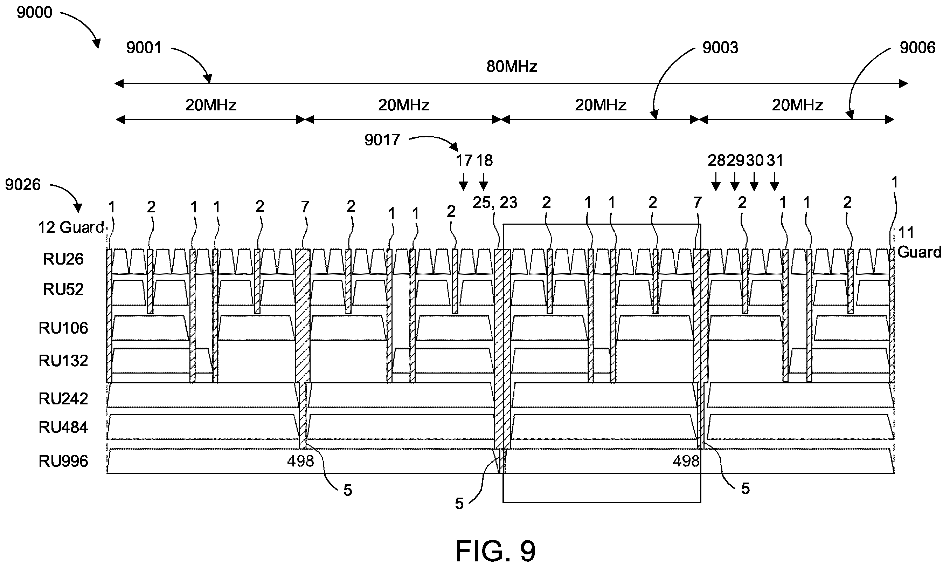

FIG. 9 shows an example of UORA RU allocation with preamble puncturing. If preamble puncturing information is carried explicitly or implicitly in a Trigger frame, one User Info field may be enough to indicate a set of RU allocation with preamble puncturing. Note, in this document, the terms UORA RU and RA RU may be used interchangeably.

For example, as shown in FIG. 9, the STA (e.g., an AP STA) may acquire 80MHz channel 9001, and the third 20MHz subchannel 9003 (as shown by the box in FIG. 9) may be punctured. The AP STA may transmit a Trigger Frame with a User Info field 800 (example shown in FIG. 8) to allocate a set of RU26 RUs 9026 for UL random access. For example, the RU allocation field 810 (shown in FIG. 8) may indicate the starting RU is the 17th RU26 RU 9017, and the RA-RU 30 (shown in FIG. 8) may indicate 6 RUs are allocated to UORA access. Puncturing information may be signaled in the Trigger frame and thus the receiving STAs may know the third 20MHz subchannel 9003 is punctured. Then the receiving STAs may know the 17th, 18th, (9017) and 28th, 29th, 30th, 31st (9006) RU26 RU are allocated for random access.

In some methods, if preamble puncturing information is not carried in a Trigger frame, more than one User Info field 800 may be used to indicate a set of RU allocation with preamble puncturing. In examples as shown FIG. 9, two User Info fields may be used. In the first User Info field, the RU allocation field may indicate the 17th RU26 RU as starting RU, and the RA-RU field may indicate 2 contiguous RA-RUs. In the second User Info field, the RU allocation field may indicate the 28th RU26 RU as starting, and RA-RU field may indicate 4 contiguous RA-RUs.

In some methods, if the RU allocation field indicates that the starting RU is an RU combination or multiple RUs (MRU), then the allocated RUs for UORA access may be the MRUs with the same size as the starting MRU.

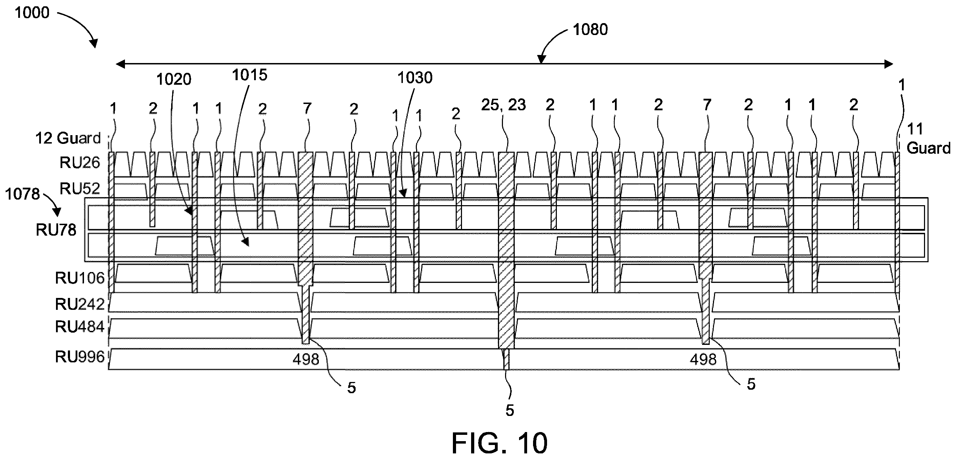

FIG. 10 illustrates possible UORA RUs when the starting RU is RU78 (RU26+52) 1078 for an 80MHz channel 1080, and FIG. 11 illustrates possible UORA RUs when the starting RU is RU132 (RU106+26) for an 80MHz channel. The figures show allowed RUs for 802.11be. In FIG. 10, RU 78 1078 is newly added, which is a combination of RU26 and RU52. The example shows allowed RU78 in two rows. In some methods, if the starting RU is a RU78, the RUs in the same row (RUs in the same blue box) may be considered as possible RA-RUs depending on the number of RA-RUs. This way, non-overlapping RUs are allocated for random access. In some methods, if the starting RU is a RU78, all of the allowed RU78 RUs (RUs in the same red box) may be considered as possible RA-RUs depending on the number of RA-RUs. In some methods, such as those shown in FIG. 11, overlapping RA-RUs (e.g., RU78s shown in FIG. 10 at 1078) may not be considered. For instance, as shown in FIG. 11, the second and fourth RU78 in each row are not considered for RA-RUs. A STA that may receive a Trigger frame with the first RA-RU being a RU78 RU may not use all the overlapping RU78s for UORA transmissions.

In FIG. 11, RU132 1132 is newly added, which may be a combination of RU26 and RU106 (illustrated in FIG. 10). This figure shows the allowed RU132 in one row 1120. In some methods, if the starting RU is a RU78 (Fig. 10 at 1078), the RUs in the same row (RUs in the same box 1020 or 1015 shown in FIG. 10) may be considered as possible RA-RUs depending on the number of RA-RUs. In some methods, if the starting RU is a RU78 (FIG. 10 at 1078), all of the allowed RU78 RUs (RUs in the same box 1030) may be considered as possible RA-RUs depending on the number of RA-RUs. A combination of the above methods may be used to indicate the MRU with preamble puncturing.

Further with respect to the design of the Trigger frame, the Trigger frame may be further modified to include a BW Restricted field. (See, e.g., FIG. 8 at 840.) This field may be used to indicate if restricted access may be applied to a set of STAs. Alternatively, or additionally, the BW restricted field may not be present and instead a special AID may be used to indicate one BW restricted case. For example, AID value x may indicate wideband STAs may access the RA-RUs allocated in the User Info field. AID value y may indicate narrowband STAs may access the RA-RUs allocated in the User Info field etc. In a third method, BW Restricted may be signaled together with another subfield or subfields in the User Info field.

The Trigger frame may further include a Puncturing Information field. This field may indicate which subchannel is punctured from DL/UL transmissions. In some methods, the puncturing information may be carried in a Trigger Dependent User Info field. The presence of this field may be optional depending on if the User Info field may be used for UORA triggering. In one method, the puncturing information may be carried in the User Info field which carries the UORA allocation. In one method, the puncturing information may be carried in Common Info field in Trigger frame. In one method, a User info field with a special AID value may be used to carry common information for 11be and/or 11be+ STAs. The puncturing information may be carried in that User info field.

In an example implementing an above-mentioned method, a Trigger Frame may carry more than one User Info field, which may trigger 11be UORA access. In the first UORA User Info field, a set of RUs (RU set A) may be allocated with BW restrict set to value 0, while in the second UORA User Info field, a set of RUs (RU set B) may be allocated with BW restricted set to value 1. The UORA access rule for RU set A and RU set B may be different, and thus we may use the feature to trigger UORA from STAs with mixed bandwidth capability.

In some examples, a Trigger frame may be used to trigger UORA transmission over multiple segments where each segment may have the same set of RUs and repeated over all the segments.

Embodiments directed to bandwidth (BW) and BW Extension Fields are described herein. In some methods, Punctured Channel information may be carried in a Common Information field or special information field, which may be used to carry leftover common information for 11be STAs or future version STAs.

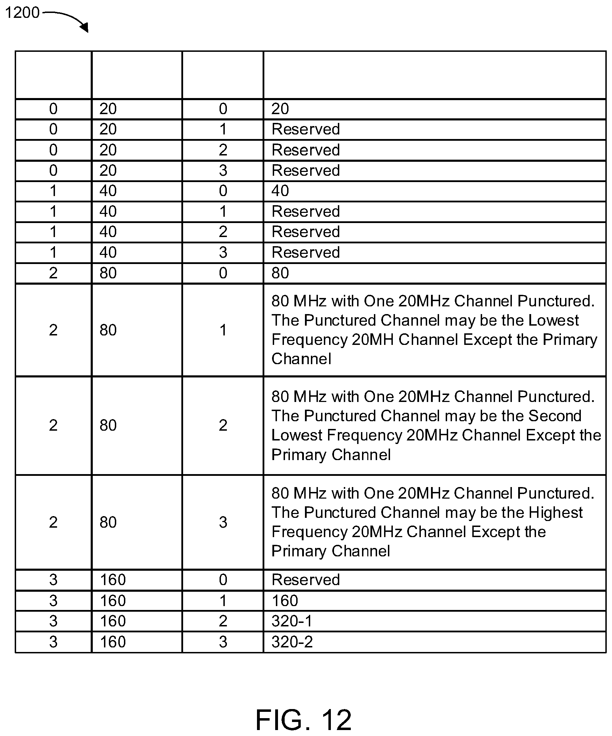

In some methods, Punctured Channel information may be carried together with one or more UL BW extension fields. An UL BW field may be carried in a Common info field, and an UL BW extension field may be carried in a special information field. For example, some reserved values in UL BW and UL BW Extension fields may be used to indicate punctured channel information. An shown in FIG. 12 where a combination of parameters (e.g., UL BW = 2 and UL BW Extension = [1,2,3]) may be used to indicate the cases in which 80MHz transmission is performed and one 20MHz non-primary channel is punctured.

FIG. 12 is a table 1200 illustrating an exemplary BW and BW Extension field design with punctured channel information.

In some examples, any of four reserved values may be used to indicate the information. For instance, reserved value 1 may indicate that an 80 MHz channel is used, with one 20MHz channel punctured. The punctured channel may be the lowest frequency 20MHz channel. Reserved value 2 may indicate that an 80 MHz channel is used, with one 20MHz channel punctured. The punctured channel may be the second lowest frequency 20MHz channel. Reserved value 3 may indicate that an 80 MHz channel is used, with one 20MHz channel punctured. The punctured channel may be the third lowest frequency 20MHz channel. Reserved value 4 may indicate that an 80 MHz channel is used, with one 20MHz channel punctured. The punctured channel may be the highest frequency 20MHz channel.

In some methods, 80MHz may refer to the 80MHz channel on which the Trigger frame is transmitted when the STA that transmits the Trigger frame acquires a wider bandwidth channel. For example, an AP may acquire a 160MHz channel, and it may transmit Trigger frame 1 (TF1) on the primary 80MHz channel and Trigger frame 2(TF2) on the secondary 80MHz channel. TF1 and TF2 may carry different content and different BW/BW extension fields. STAs that may park on the primary 80MHz channel may be triggered by TF1 and STAs that may park on the secondary 80MHz channel may be triggered by TF2.

In some methods, the punctured channel information for BW wider than 80MHz may need to be carried in the Trigger Frame. In such cases, other reserved values in the BW/BW extension table may be used to signal some punctured channel information. For example, some reserved values may be used to signal a 160MHz transmission with one 40MHz channel being punctured (additional (e.g., 3 or 4) reserved values may be needed), and some reserved values may be used to signal 320MHz transmission with one 80MHz channel punctured (additional (e.g., 3 or 4) reserved values may be needed).

However, with limited reserved values in the BW/BW extension table, not all of the punctured scenarios may be included. For instance, in the above-mentioned example, 160MHz transmission with one 20MHz channel punctured may not have a reserved value in the table. In some methods, those punctured scenarios may be disallowed in trigger-based transmissions. In some of these cases, the punctured scenarios may be signaled using other fields in the Trigger frame.

In some scenarios, such as when an EHT version of frame, such as Trigger frame, uncement frame etc., is carried by a non-HT PPDU or a non-HT DUP PPDU, BW information may be carried in a SERVICE field at the beginning of a PPDU data field. There may be 16 bits in SERVICE field, and some bits may be reserved. The reserved bit or bits may be used to indicate the BW for EHT transmissions. When an EHT version or frame, such as Trigger frame, NDP Announcement frame, etc., is carried by an EHT PPDU, the BW may be in a PPDU header.

For example, an NDP Announcement frame or Trigger frame may be carried by a non-HT DUP PPDU, and the BW for the entire transmission may be signaled in the SERVICE field. An NDP Announcement frame or Trigger frame may be carried by an EHT PPDU, and the BW for the entire transmission may be signaled in the U-SIG field in the EHT PPDU PHY header. Thus, BW information may be implicitly carried and a current BW field and/or BW extension field may be used to carry other information such as Puncture Channel information. Here the BW field and/or BW extension field may be any field related to BW, e.g., in SERVICE field and/or Trigger frame.

Embodiments directed to Punctured Channel information and method of signaling such information are described herein. It should be noted that methods disclosed herein may be combined with methods disclosed in preceding or subsequent paragraphs. It should be further noted that the terms preamble puncturing information and punctured channel information may be used interchangeably.

In some solutions, punctured channel information may be signaled using one or more bitmap methods, and a size of the bitmap may depend on a Bandwidth field. For example, each bit may indicate that a 20MHz subchannel may be punctured. In some examples, such as when an 80MHz operating channel is used, a 4-bit bitmap may be enough while in examples in which a 320MHz operating channel is used, a 16-bit bitmap may be needed.

Alternatively, or additionally, Punctured Channel information may be signaled using one or more bitmap methods, and a size of the bitmap may be fixed. In some examples, an 8-bit bitmap may be defined to indicate which subchannel is punctured. When the Bandwidth field indicates operation using an 80MHz channel, each bit may indicate if a 20MHz subchannel is punctured. In such a case, the last four bits may be reserved. When the Bandwidth field indicates operation using a 160MHz channel, each bit may indicate if a 20MHz subchannel is punctured. When the Bandwidth field indicates operation using a 320MHz channel, each bit may indicate if a 40MHz subchannel is punctured. It should be noted that 240MHz operation may be considered a special case, as may 320MHz operation.

Alternatively, or additionally, Punctured Channel information may be signaled using one or more look-up table methods. For example, each entry in a look-up table may indicate one or more valid channel puncturing cases.

In some examples, not all possible preamble puncturing cases may be allowed or supported. A subset of allowed preamble puncturing cases may be identified and allowed/supported for Trigger and Trigger-based frames, so that less signaling overhead may be expected.

In some examples, Punctured Channel information for certain subchannels may be carried in one or more Trigger frames. For example, Punctured Channel information for a primary 80MHz subchannel may be carried in a Trigger frame. In another instance, Punctured Channel information for another 80MHz subchannel may be carried in a Trigger frame. The 80MHz subchannel may be the subchannel in which the Trigger frame is transmitted. Trigger frames carried on each 80MHz segment may be different from each other.

Punctured Channel information may be carried fully or partially in a Common Info field and/or a Special User Info field. A Special Use Info field, such as one defined according to 802.11be or another specification and/or having a predefined AID such as AID=2007 may carry leftover common information for EHT STAs. In some embodiments, additional Special User Info fields may be used to carry more information. Such additional fields may be optional. The Special User Info fields may be identified by one or more special AIDs. In some methods, the same AID value may be used to identify these Special User Info fields. In some methods, different special AID values may be used to identify these Special User Info fields. Each Special User Info field may have the same size as other Special User Info and User Info fields. The Special User Info fields may be optionally presented. The Special User Info field may be located directly after the Special User Info field having a predefined AID, such as an AID of 2007. In some examples, a Special User Info field may be defined to carry Punctured Channel Information. In some examples, one or more Special User Info fields may be defined to carry Multi-Channel Access Protocol (MAP)-related information. In some examples, one or more Special User Info fields may be defined to carry Hybrid Automatic Repeat Request (HARQ)-related information. In some examples, one or more Special User Info fields may be defined to carry information related to future standards releases. In some examples, the presence of one or more Special User Info fields may be signaled in Common Info fields in a Trigger frame. In some examples, STAs that support one or more Special User Info fields with special AIDs may be indicated in capability fields or elements carried by management or control frames.

Embodiments for triggering STAs to perform UORA via an A-PPDU are described herein. A Trigger frame implemented as a MAC frame can be carried in different type of PPDUs, such as non-HT PPDU and HE PPDU. In the following section, this concept is similarly extended to EHT PPDUs and A-PPDUs.

Methods in which a Trigger frame is implemented with an EHT PPDU are described some methods, some information that may be carried in PLCP header, but not in Trigger frame, may be transmitted with EHT PPDU. For example, BSS color and/or puncturing information may not be included in the Trigger Frame but may be carried in a PLCP header. However, the information may be needed for TB based transmissions. In some cases, a BSS color may be needed for UORA transmission with unassociated STAs. In some cases, a BSS color may be needed for multi-AP related transmissions. In some cases, a BSS color may be needed for multi-link related transmissions. In some cases, puncturing information may be needed for a UORA trigger with puncturing subchannels.

In the scenarios described above, for example, the Trigger frame may be carried in an EHT PPDU so that the STAs may acquire the information such as BSS color and/or puncturing info from the EHT PPDU PLCP header. In this case, the BSS color and/or puncturing information carried in the PLCP header of the PPDU which carries the Trigger Frame may be valid to the following solicited TB PPDU.

Methods in which a Trigger frame is implemented with an A-PPDU are described herein. An A-PPDU may be supported in 11be where each PPDU may be on one frequency segment and PPDUs among all frequency segments are aligned. If an AP acquires a wideband channel with one or more frequency segments, it may start A-PPDU transmissions to and from a group of STAs with different supported PHY versions. Here, the PHY version may refer to different types of PPDUs defined with different standards, for example 11ax PPDUs and 11be PPDUs. To support uplink A-PPDU transmissions from different PHY versions, e.g. 11ax STAs, 11be STAs and/or future version STAs, the AP may transmit a Trigger frame over the wideband channel it acquired.

In some methods, STAs may receive control or management frames before and park on one frequency segment which may or may not be the primary segment. A Trigger frame transmitted on each frequency segment may carry different contents, and each may be related to the resource allocation on its own segment. In some methods, in each segment, each Trigger frame may be carried by non-HT PPDU, which may be repeated on every 20MHz subchannel within the segment. In this way, legacy STAs on that segment may understand the transmission partially. In some methods, in each segment, each Trigger frame may be carried by an EHT PPDU, HE PPDU, or a future PPDU.

In some methods, a trigger frame transmitted on each frequency segments may carry the same contents which may be related to resource allocation on all segments. In some methods, a Trigger Frame may be carried by non-HT PPDU and repeated on every 20MHz subchannel. In some methods, a Trigger Frame may be carried by mixed PHY version PPDUs. For example, a Trigger Frame may be carried in non-HT PPDU and repeated over 20MHz subchannels on primary segment. The same Trigger Frame may be carried by an EHT PPDU or HE PPDU, or future type PPDUs on the non-primary segment or segments.

Solutions implementing a Trigger Frame with multiple UORA Fields are described herein. One trigger frame may be used to trigger UL transmissions from STAs with different PHY versions, e.g., 11ax STAs and 11be STAs, concurrently.

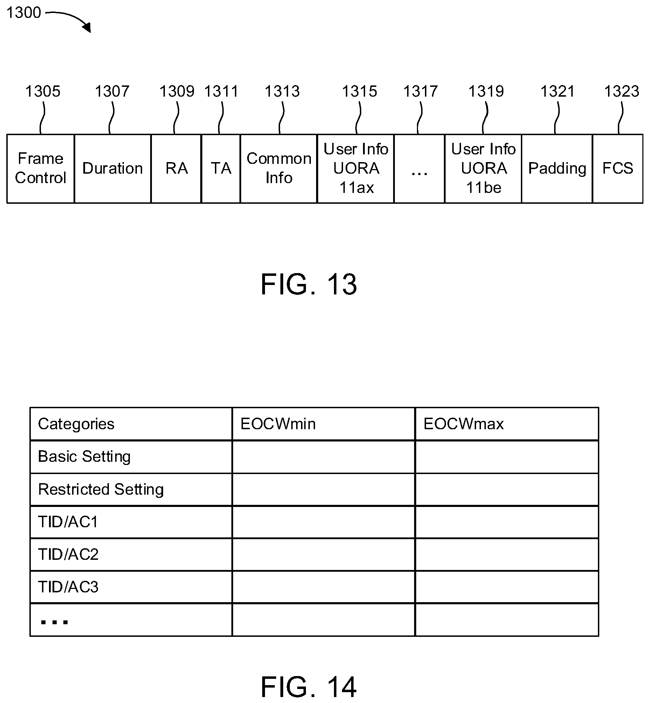

FIG. 13 illustrates an example Trigger frame 1300 for triggering UORA UL transmissions from 11ax and 11be STAs. Some User Info fields, e.g., 1315 may be used to trigger 11ax TB PPDUs while some User Info fields, e.g., 1319 may be used to trigger 11be TB PPDU. Therefore, it is possible that a User Info field 1315 with a UORA trigger for 11ax STAs and a User Info field 1319 with a UORA trigger for 11be STAs are both present in the same Trigger Frame 1300. In this case, a 11be STA may be able to use resources allocated in either User Info field 1315 or user info field 1319 if no restriction is applicable. To enable a more efficient transmission, an AP may in addition, indicate whether an 11be STA may use resources allocated to an 11ax STA.

In some methods, the AP may make a decision whether an 11be STA may use resources allocated to 11ax STAs. The AP may indicate this decision via a field in a Beacon frame or a Trigger frame. For example, in a Beacon frame (not shown), a field comprising at least one bit may indicate whether an 11be STA is allowed to use resources allocated to 11ax STAs. The indication may be applicable to all associated and unassociated 11be STAs in the beacon interval. The decision may be updated and the at least one bit changed in a next Beacon frame. In a Trigger frame 1300, at least one bit in the User Info field may be used to indicate if an 11be STA may use resources allocated to 11ax STAs. The at least one bit may be carried in a User Info field, which may be used to allocate RA-RUs for 11be and/or 11ax STAs.

In some methods, the AP may allow an 11be STA to determine which resource it will contend for. In that case, if the STA determines to access RA RUs assigned for 11ax STAs, it may consider all the RA RUs allocated for 11ax STAs as total number of eligible RA RUs and use that for OBO countdown. If the STA determines to access RA RUs assigned for 11be STAs, it may consider all the RA RUs allocated for 11be STAs as total number of eligible RA RUs and use that for OBO countdown. Alternatively, the STA may consider all the RA RUs allocated for 11ax STAs as well as all the RA RUs allocated for 11be STAs as eligible RA RUs and use both for OBO countdown. If the OBO value is less than or equal to the number of eligible RA RUs, the STA may set its OBO counter to zero and randomly select one of the eligible RA RUs to transmit. In this case, the STA may select an 11ax RA RU or an 11be RA RU for UORA transmission.

In some methods, the AP may allow an 11be STA to access resources allocated to 11ax STAs, but with lower priority. This is referred to herein as restricted UORA access. Embodiments directed to restricted UORA access are described herein. Restricted UORA access may allow a group of STAs to access some RA RUs with some limitations. One purpose of restricted UORA access may be to limit the chance of channel access from certain STAs so that the rest of the STAs (e.g., STAs with normal UORA access) may have a better chance of accessing the UORA RUs.

In some method embodiment, a group of STAs may have restricted UORA access to certain RA RUs and not others. For example, STAs with wideband operation capability may have restricted UORA access to RA RUs in a primary segment and STAs with narrowband operation capability may be set to normal UORA access. In this way, compared to the wideband capable STAs, narrow band STAs may have higher priority to access these RA RUs while wideband capable STAs may be capable of accessing RA RUs on other segments. In some examples, 11be STAs may have restricted UORA access to RA RUs allocated to HE TB PPDU, while 11ax STAs may have normal UORA access. In this way, comparing to the 11be STAs, 11ax STAs may have higher priority to access these RA RUs related to HE TB PPDU while 11be STAs may be capable of accessing RA RUs allocated to EHT TB PPDU. In some examples as described substantially in paragraphs above, STAs with multiple link capability may face problems performing UORA access when other STAs are capable of performing UORA access on fewer links.

An AP may configure special EDCA parameters and/or UORA access parameters for the STA that may have restricted UORA access. For example, a newly defined EOCWmin and EOCWmax may be introduced to indicate the minimum/maximum value of OCW for the restricted initial EHT TB PPDU transmission.

In some methods, a Restricted UORA Parameter Set element may be defined. The format of the Restricted UORA Parameter Set element may be similar to UORA Parameter Set element defined in 802.11ax. However, the value may of EOCWmin and EOCWmax may be different and applied to restricted UORA access STAs. For example, EOCWmin and EOCWmax in a Restricted UORA Parameter Set element may be bigger than that in UORA Parameter Set element, so restricted STAs may have greater chance to randomly select an OBO value and thus have lower priority for accessing the RA RUs comparing to STAs with normal UORA access.

In some methods, an enhanced UORA Parameter Set element may be defined. FIG.14 illustrates an enhanced UORA Parameter Set Table 1400 indicating EOCWmin 1405 and EOCWmax 1410 configurations. Besides EOCWmin and EOCWmax for restricted UORA access, a set of EOCWmin/EOCWmax values may be defined based on TID or access category 1411. For example, one or more or all entries in Table 1400 of FIG. 14 may be carried in the UORA Parameter Set. By setting different values in table 1400, an AP may be able to reduce the probability of a collision occurring upon UORA access.

Embodiments related to spatial reuse are described herein. In the following paragraphs, a PSR definition may be described.

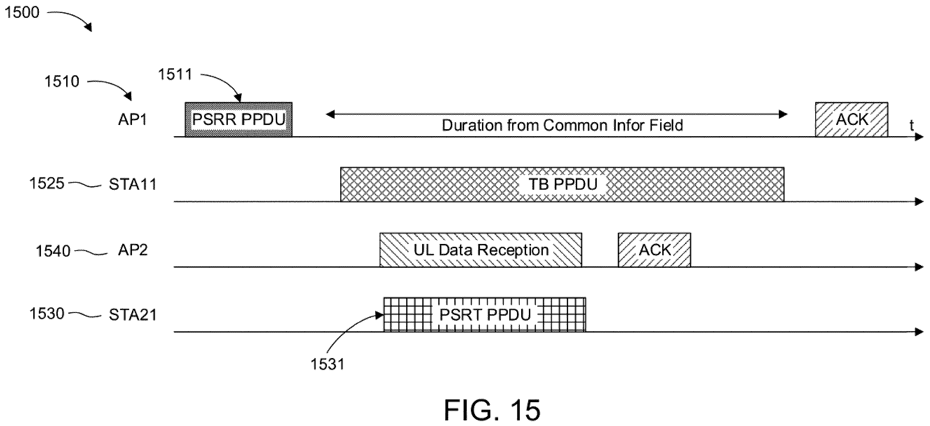

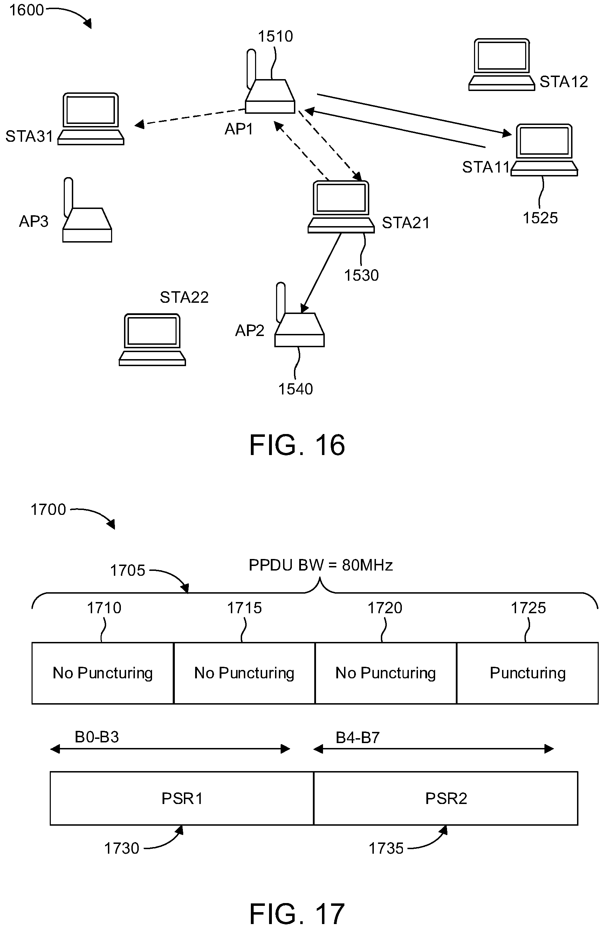

FIG. 15 is a transmission timing diagram illustrating an example of PSRR PPDU spatial reuse. FIG. 16 is a block diagram illustrating the WLAN network architecture of the devices communicating in FIG. 15. FIG. 15 and FIG. 16 will be described together, where like numerals represent the same device in both figures. A PSRR PPDU 1511 may be transmitted by AP1 1510 with the transmit power *TX_{PWRPSRR PPDU}.* PSRR PDU 1511 is a trigger frame triggering the transmission of a TB PPDU from STA11 1525 to the AP1 1510. At least one STA, e.g., STA 21 1530, in an overlapping BSS (OBSS) of AP2 1540, overhears the PSRR PPDU and identifies a PSR opportunity. STA21 transmits a PSRT PPDU 1531 to AP2 1540 during the identified PSR opportunity, while STA11 1525 transmit its TB PPDU to AP1 1510 in a spatial reuse configuration. The transmit power of PSRT PPDU 1531 transmitted by STA21 1530 to AP2 1540 may be calculated by STA 1530. The limitation of transmit power of the PSRT PPDU 1531 (in linear domain) may satisfy at least one or more of the following conditions.

If there is only one STA that has a PSRT PPDU queued for transmission, the intended transmit power of the PSRT PPDU in W may follow the constraint as follows: ${TX}_{{PWR}_{STA}} \left(PPDU_BW\right) ∗ {RX}_{{PWR}_{STA}} \left(PPDU_BW\right) \leq {\sum }_{i = 1}^{{N}_{s}} {PSR}_{i}$ Eq.1

If there could be more than one STA that has a PSRT PPDU queued for transmission, the intended transmit power of all PSRT PPDUs in W may be calculated by the STT as follows: ${\sum }_{k = 1}^{# ofPSR STAs} {TX}_{{PWR}_{{STA}_{k}}} \left(PPDU_BW\right) ∗ {RX}_{{PWR}_{{STA}_{k}}} \left(PPDU_BW\right) \leq {\sum }_{i = 1}^{{N}_{s}} {PSR}_{i}$ Eq. 2 where # of PSR STAs may refer to a number of STAs that simultaneously transmit PSRT PPDU during this PSR opportunity. To make the computation of transmit power easier, it may be equal to the maximum number of the allowable PSR STAs, which can be signaled in the Trigger frame. *PSRᵢ* may be the quantized value of *PSR_INPUTᵢ* in a linear domain. *PSR_{INPUTᵢ}* may be equal to *αᵢ* × *TX* _{*PWR_{PSRR}* PPDU} (*PPDU_BW*) × *I* _{*AP*1} *_{,i}. TX_{PWR_{PSRR} PPDU}* (*PPDU_BW*) may be the total transmit power (in Watts) of PSRR PPDU at an antenna connector of AP1 for *PPDU_BW. RX_{PWR_{STA}}* (*PPDU_BW*) may be the total received power (in Watts) of PSRR PPDU at the STA that transmitted the PSRT PPDU. *αᵢ* may be the conversion factor between *I* _{*AP*1*,i*} unit and *PSRᵢ* unit. For example, in an EHT Trigger frame, there may be two PSR units in total. For an EHT PPDU with CBW 80MHz with 20MHz puncturing, each PSR may represent 40MHz BW as indicated in FIG. 17. For the first 40MHz channel with no puncturing, *PSR* ₁ may represent 40MHz and *I* _{*AP*1,1} may represent the acceptable interference level on the first 40MHz, α₁ = 1. For the secondary 40MHz channel with 20MHz puncturing, *PSR₂* may represent 20MHz, *I* _{*AP*1,2} represents the acceptable interference level on the non-punctured 20MHz, *α* ₂ = 2. Alternatively, or additionally, PSR1 may represent each 20MHz of the 1st 40MHz channel and PSR2 may represent the non-punctured 20MHz of the 2nd 40MHz channel. In such cases, *α* ₁ *= α* ₂ = 1. Note that PSR fields carried in a trigger frame may be considered as per subchannel PSR values. The subchannel bandwidth may be 20MHz, 40MHz or 80MHz depending on the total operating bandwidth. Note, subchannel puncturing conditions may be included in the Trigger frame explicitly or carried in a frame transmitted before the Trigger frame, e.g., a Beacon frame. Alternatively, subchannel puncturing conditions may not be carried explicitly and the receive STA may need to process and estimate which subchannel(s) may be punctured.

FIG. 17 is a diagram illustrating an example of a punctured channel with PSR indication 1700. *I* _{*AP*1*,i*} (*ith Subchannel*) may be the acceptable interference (in W) at AP1 for the *i-*th non-punctured subchannel(s) of PSRR PDU. ${I}_{AP 1 , i} \left(ith Subchannel\right) = \frac{\frac{Target Received Power \left(PPDU_BW\right)}{SNR \left(PPDU_BW\right) \times {N}_{s}}}{{SaftyMargin}_{i} \left(ith Subchannel\right)}$ Eq. 3 The Target Received Power (*PPDU_BW*) may be the UL Target Receive Power (in Watt) for the TB PPDU transmitted on the PSRR PPDU BW using the highest MCS. SNR(*PPDU_BW*) may be the minimum SNR value at AP1 for the *PPDU_BW* channel that yields <= 10% PER for the highest MCS. SafetyMargin_i may be the safety margin for the ith Subchannel that is determined by AP. Alternatively, or additionally, *I* _{*AP*1,*i*} (*ith Subchannel*) can be expressed as ${I}_{AP 1 , i} \left(ith Subchannel\right) = \frac{\frac{Target Received Power \left(ith subchannel\right)}{SNR \left(ith Subchannel\right)}}{{SaftyMargin}_{i} \left(ith Subchannel\right)}$ Eq. 4

The Target Received Power (*ith Subchannel*) may be the UL Target Receive Power for the TB PPDU transmitted on the ith Subchannel using the highest MCS. SNR(*ith Subchannel*) may be the minimum SNR value at AP1 for *ith* subchannel that yields, for example, <= 10% PER for the highest MCS. 10% PER is exemplary and the system, for example, an AP, may set the PER. *Nₛ* may be a number of non-punctured subchannels in a PSRR PPRDU.

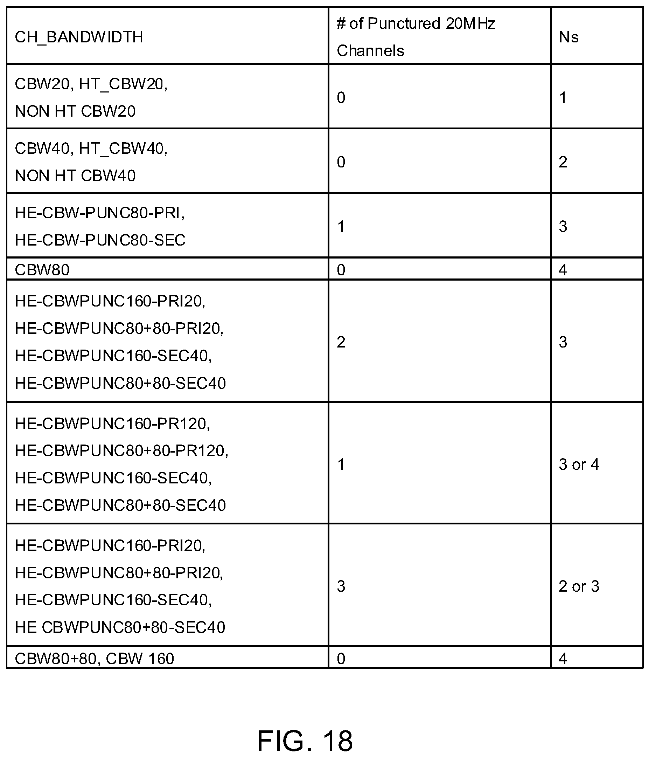

FIG. 18 is a table illustrating an exemplary expression of Ns in HE Trigger Frame.

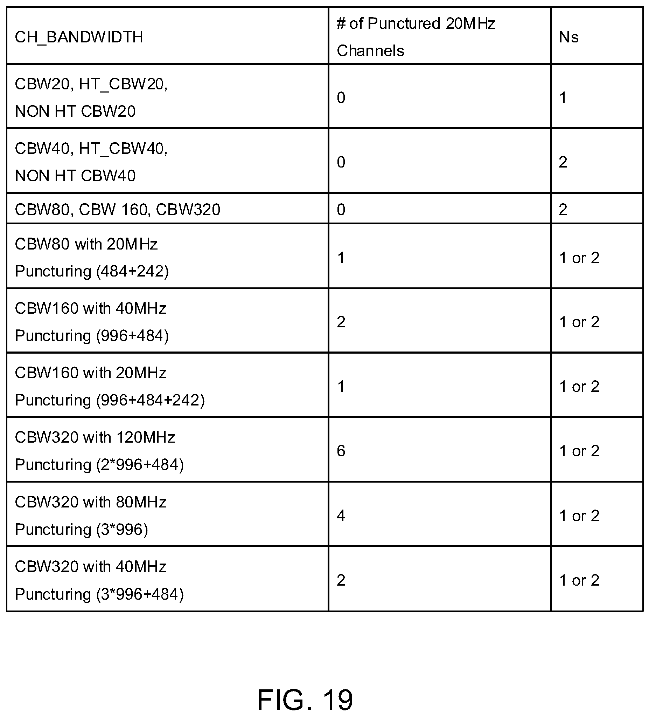

FIG. 19 is a table showing an exemplary expression of Ns in an EHT Trigger Frame.

When a PSR subfield in the Common Info field 1313 or Special User field 1315 corresponds to the channel that contains a punctured subchannel, another option may be to set this PSR subfield to PSR_Disallow. It should be noted that *RX_{PWR_{STA}}* (*PPDU*_*BW*) and *TX_{PWR_{PSRR PPDU}}* (*PPDU_BW*) do not have to be the received power over the whole bandwidth of PSRR PPDU and the transmit power of PSRR over the whole bandwidth of PSRR PPDU. It can be the received power and transmit power measured over the same channel BW within the PSRR PPDU.

Additionally, or alternatively, a PSR unit in a linear domain may be expressed in *W* ² and its unit in a dB domain may be expressed in dB.

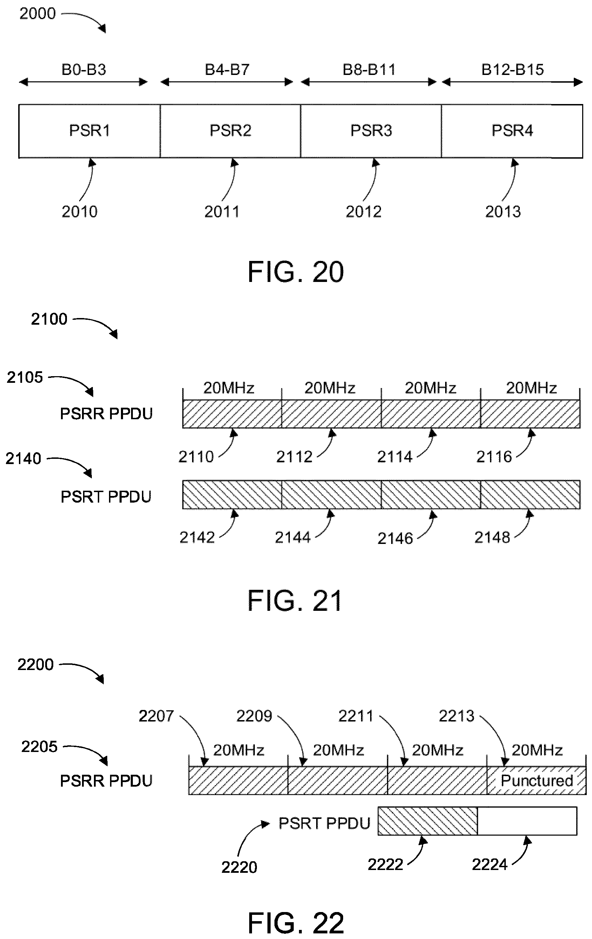

As shown in FIG. 20, some embodiments may provide for the use of different values in UL Spatial Reuse subfields 2010 to 2013 of an SR field 2000 in either a common info field or a user info field of a trigger frame (example illustrated in FIG. 13). FIG. 20 shows examples of UL Spatial Reuse subfields 2010-2013. When PSR values in the UL SR subfields 2010-2013 of a Trigger Frame 1300are not identical and neither or none are equal to PSR_DISALLOW, i.e., *PSR* ₁ ≠ *PSR* ₂ ≠ *PSR₃* ≠ *PSR₄* as shown in FIG. 20, an upper bound of the intended transmit power of the Parameterized Spatial Reuse Transmission (PSRT) PPDU may be defined.

If PSR_DISALLOW is false for all PSR fields, *PSRᵢ* for *i* = 1,2,3,4, may be computed based on one or more of the several parameters or characteristics. For example, *PSRᵢ* for *i* = 1,2,3,4, may be computed based on the total received power of the trigger frame carrying a PPDU (e.g., a PSRR PPDU) over the fraction of the PPDU bandwidth, e.g., a 20MHz or 40MHz. In some cases, *PSRᵢ* for *i* = 1,2,3,4, may be computed based on an acceptable receiver interference level at the AP (e.g., the trigger frame sender) over the fraction of the PPDU bandwidth, which may be calculated based on the information in the UL Target Receive Power subfield in the Trigger frame, for example, by summing those target receive power values corresponding to the resource units (RUs) within the fraction of the PPDU bandwidth (e.g., 20 or 40MHz) or the fraction of the target receive power value when the RU size is larger than 20 or 40 MHz in 40 or 80 MHz PPDU bandwidth, respectively.

More specifically, in some embodiments assuming an RU BW is less or equal to 20MHz, ${P}_{{RU}_{i}}^{rx _ target}$ may be the expected receive signal power, measured at the AP's antenna connector and averaged over the antennas, for the HE portion of the HE TB PPDU transmitted on the assigned *i*th RU indicated in the trigger frame for *i =* 1, *..., N_{RU},* where *N_{RU}* is the number of RUs within the 20MHz PPDU channel. *SNR_{MCSᵢ}* may be the minimum SNR value that yields ≤ 10% PER for that the MCS for the i-th RU. Then $Acceptable Reveiver Interference {Level}_{AP} = {\sum }_{i = 1}^{{N}_{RU}} {P}_{{RU}_{i}}^{rx _ target} - {SNR}_{{MCS}_{i}} - {Margin}_{i}$ Eq. 5 or $Acceptable Receiver Interference {Level}_{AP} = α + {max}_{i} \left(\begin{matrix}{P}_{{RU}_{i}}^{rx _ target} - {SNR}_{{MCS}_{i}} - \\ {Margin}_{i}\end{matrix}\right)$ Eq. 6 where *α* may be 10 log₁₀(20*MHz*/*BW_{RUⱼ}* [*MHz*])*, BW_{Ruⱼ}* may be the bandwidth of RU_j, and j may be defined as $j = arg {max}_{i} \left({P}_{{RU}_{i}}^{rx _ target}-{SNR}_{{MCS}_{i}}-{Margin}_{i}\right)$.

In some embodiments assuming RU BW is greater than 20MHz ${P}_{RU}^{rx _ target}$ may be the expected receive signal power, measured at the AP's antenna connector and averaged over the antennas, for the HE portion of the HE TB PPDU transmitted on the assigned RU_indicated in the trigger frame. *SNR_{MCSᵢ}* may be the minimum SNR value that yields ≤ 10% PER for that the MCS for the RU. Then, the *Acceptable Receiver Interference Level_{AP}* in dBm for the 20 MHz that the RU covers may be $Acceptable Receiver Interference {Level}_{AP} = β + \left({P}_{RU}^{rx _ target}-{SNR}_{MCS}-Margin\right)$ Eq. 7 where $β = 10 {log}_{10} \left(20MHz/{BW}_{RU}\left[MHz\right]\right) .$

The aforementioned methods to set the value of *Acceptable Receiver Interference Level_{AP}* with 20MHz PSR granularity may be extended to a granularity larger or smaller than 20MHz, i.e., replacing "20MHz" by *BW_{PSR}* in MHz which is the bandwidth of the PSR channel granularity.

One or several solutions may be implemented in order to set or determine an upper bound of the STA transmit power in dBm if there is only one PSRT PPDU. In some solutions, an upper bound of PSRT PPDU total transmit power over the PSRT PPDU bandwidth may be expressed as in Equation 8, shown below: $\begin{matrix}{TX}_{{PWR}_{STA}} - 10 {log}_{10} \left(\frac{{PPDU}_{BW}}{CH BW corresponding to PSR subfield}\right) \leq \\ {min}_{i ∈ \left(1,#of PSR subfields\right)} \left({PSR}_{i}\right) - RPL\end{matrix}$ Eq. 8

As expressed in Equation 8, *TX_{PWR_{STA}}* may be the transmit power (in dBm) over the PSRT PPDU bandwidth. *PSRᵢ* may be the value in the *i*th subfield of the UL Spatial Reuse subfield of Common Info field in the Trigger frame that is the PSR dB value converted from the linear PSR value defined substantially in paragraphs above. *RPL* may be the total received power level (in dBm) at the receiver antenna connector over the Parameterized Spatial Reuse Reception (PSRR) PPDU bandwidth, during the non-HE portion of the PPDU preamble of the triggering PPDU, averaged over all antennas used to receive the PPDU.

In some solutions, an upper bound of the PSRT PPDU total transmit power over the PSRT PPDU bandwidth may be defined as in Equation 9, shown below: ${TX}_{{PWR}_{STA}} \leq 10 {log}_{10} \left({\sum }_{i = 1}^{# of PSR subfields} {10}^{\frac{{PSR}_{i}}{10}}\right) - RPL$ Eq. 9 *RPL* may be the total received power level at the receiver antenna connector, over the PSRR PPDU. In some solutions, an upper bound of the PSRT PPDU transmit power on an *i*th subchannel (e.g., subchannel BW = 20MHz) of the PSRT PPDU may be expressed as in Equation 10, shown below: ${TX}_{{PWR}_{{STA}_{i}}} \leq \left({PSR}_{i}-{RPL}_{i}\right)$ Eq. 10

In above expression, *PSRᵢ* may be the PSR value that corresponds to the *i*th subchannel. A PSR value may be indicated in a User Info field of the Trigger frame or Common Info field of the Trigger frame. *PSRᵢ* may also be generated or selected from a list of the PSR values in the Trigger frame. *RPLᵢ* may be the received power level at the receiver antenna connector over the *i*th subchannel within the overlapping channel between STA operating channel and PSRR PPDU.

The total transmit power of PSRT PPDU may be the sum of the transmit power on all subchannels which may be indicated on UL SR subfields, i.e., as shown in Equation 11 below: ${TX}_{{PWR}_{STA}} = 10 {log}_{10} \left({\sum }_{i = 1}^{# of PSR subfields} {10}^{\frac{{TX}_{{PWR}_{{STA}_{i}}}}{10}}\right)$ Eq. 11
Alternatively, or additionally, the transmit power may be over the non-punctured subchannels (e.g., subchannel BW = 20MHz) within PSRT PPDU. ${TX}_{{PWR}_{STA}} = 10 {log}_{10} \left({\sum }_{i = 1}^{{N}_{S}^{PSRT}} {10}^{\frac{{TX}_{{PWR}_{{STA}_{i}}}}{10}}\right)$ Eq. 12
where ${N}_{S}^{PSRT}$ is the number of non-punctured subchannels within PSRT PPDU. In some methods, the upper bound transmit power per subchannel (e.g., subchannel BW = 20MHz) may be defined as ${TX}_{{PWR}_{{STA}_{_ subchannel}}} \leq {min}_{i ∈ set of subchannels} \left({PSR}_{i}-{RPL}_{i}\right)$ Eq. 13
where *PSRᵢ* may be the PSR value which corresponds to the *i*th subchannel. The PSR value may be User Info field of the Trigger frame or Common Info field of the Trigger frame. *PSRᵢ* may also be generated or selected from a list of the PSR values in the Trigger frame. *RPLᵢ* may be the received power level at the receiver antenna connector over the *i*th subchannel within the overlapping channel between STA operating channel and PSRR PPDU. A set of subchannels may include the non-punctured subchannels within the overlapping channel between STA operating channel and PSRR PPDU. Alternatively, or additionally, the upper bound transmit power per subchannel may be defined as ${TX}_{{PWR}_{{STA}_{_ subchannel}}} \leq {min}_{i ∈ set of subchannels} \left({min}_{j ∈ PSR subfields}\left({PSR}_{j}\right)-{RPL}_{i}\right)$ Eq. 14
where *PSRⱼ* may be the jth PSR value which is indicated in User Info field of the Trigger frame or Common Info field of the Trigger frame. *PSRᵢ* may also be generated or selected from a list of the PSR values in the Trigger frame. *RPLᵢ* is the received power level at the receiver antenna connector over the *i*th subchannel within the overlapping channel between STA operating channel and PSRR PPDU. A set of subchannels may include the non-punctured subchannels within the overlapping channel between STA operating channel and PSRR PPDU.

The transmit power over PSRT PPDU may be expressed as ${TX}_{{PWR}_{STA}} = 10 {log}_{10} \left({N}_{s}^{PSRT}∗{10}^{\frac{{TX}_{{PWR}_{{STA}_{subchannel}}}}{10}}\right)$ Eq. 15 where ${N}_{s}^{PSRT}$ may be the number of non-punctured subchannels within the PSRT PPDU. In some methods, it may be required that the PSRT PPDU operating BW should be same or within PSRR PPDU, i.e., *BW_{PSRT}* ≤ *BW_{PSRR}.* Then all the power constraints proposed for PSRT PPDU may be applied to this case where PSRT PPDU operational BW is same or within PSRR PPDU as indicated in the exemplary cases depicted in FIG. FIGS. 21-24.

FIG. 21 is an illustration 2100 of PSRR PPDU 2105 and PSRT PPDU 2140 where PSRR PPDU BW = PSRT PPDU BW and ${N}_{s}^{PSRT} = 4$.

FIG. 22 is an exemplary illustration 2200 of PSRR PPDU 2205 and PSRT PPDU 2220 where PSRR PPDU BW > PSRT PPDU BW and ${N}_{s}^{PSRT} = 1$ *or* 2 depending on if an OBSS STA knows the punctured subchannel in the PSRR PPDU.

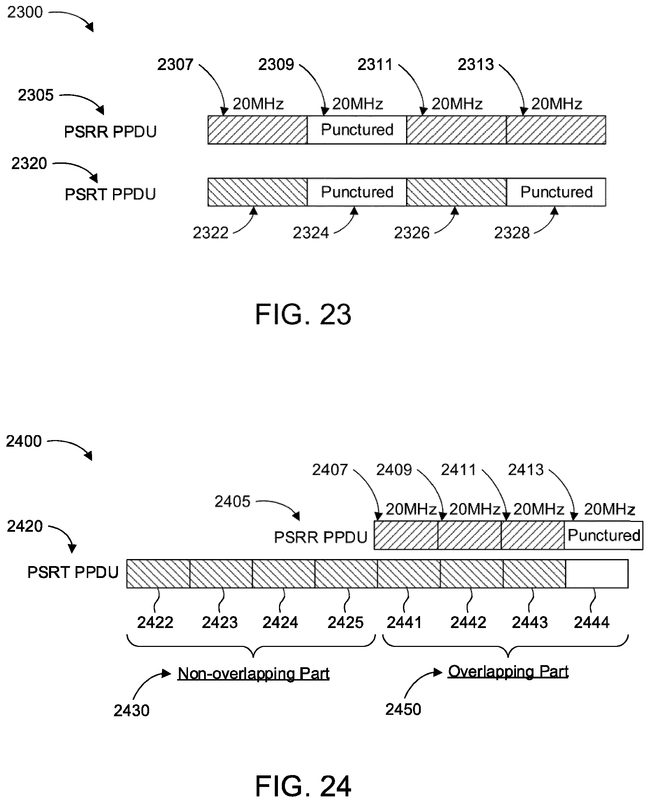

FIG. 23 is an exemplary illustration 2300 of a PSRR PPDU 2305 and PSRT PPDU 2320 where PSRR PPDU 2305 BW = PSRT PPDU 2320 BW, and ${N}_{s}^{PSRT} = 2$ *or* 3 depending on if an OBSS STA knows the punctured subchannel in the PSRR PPDU 2305. If an OBSS STA knows there is one punctured subchannel in PSRR PPDU 2305, ${N}_{s}^{PSRT} = 2$; otherwise ${N}_{s}^{PSRT} = 3$.

FIG. 24 is an exemplary illustration 2400 of a PSRT PPDU 2420 with a BW larger than a PSRR PPDU 2405 BW. If the PSRT PPDU 2420 operating BW is larger than the PSRR PPDU 2405 BW as indicated in FIG. 24 then there may be two options: one option may be an unequal power set up in the PSRT PPDU 2420. The power upper bound on the overlapping part, *TX_{Pwr_{overlapping}} ,* may follow the power upper bound set up restricted by PSR using the methods mentioned before; the power set up on non-overlapping part, *TX_{Pwr_{non-overlapping}} ,* may not be constrained by PSR setting but may be constrained by other system requirement. The total transmit power of PSRT PPDU 2420 is the sum of the transmit power on overlapping part and the transmit power on non-overlapping part, i.e. ${TX}_{{pwr}_{PSRT}} = {TX}_{{Pwr}_{overlapping}} + {TX}_{{Pwr}_{non - overlapping}}$ Eq. 16

In another option, there may be an equal power setup in overlapping parts 2450 and non-lapping parts 2430 of PSRT PPDU 2420. The transmit power on overlapping parts 2450 may be computed first. Make *TX_{Pwr_{non-overlapping}}* = *TX_{Pwr_{overlapping}} .* The calculation of *TX_{Pwr_{overlapping}}* may use any of the methods or equations described or mentioned in other paragraphs. The total transmit power of PSRT PPDU 2420 may be the sum of the transmit power on overlapping parts2450 and the transmit power on non-overlapping parts 2430, i.e. ${TX}_{{pwr}_{PSRT}} = {TX}_{{Pwr}_{overlapping}} + {TX}_{{Pwr}_{non - overlapping}}$ Eq. 17

The transmit power upper bound on 20MHz subchannel within the overlapping part 2450 may be computed first, e.g., using any of the methods or equations described or mentioned in other paragraphs. Then the total transmit power over the whole PSRT PPTU 2420 may be ${TX}_{{PWR}_{STA}} = 10 {log}_{10} \left(\left({N}_{s 1}+{N}_{s 2}\right)∗{10}^{\frac{{TX}_{{PWR}_{{STA}_{subchannel}}}}{10}}\right)$ Eq. 18

*N* _{*s*1} may be the number of the non-punctured subchannels in non-overlapping parts 2430; *N* _{*s*2} may be the number of the non-punctured subchannels in overlapping parts 2450. ${TX}_{{PWR}_{{STA}_{subchannel}}}$ may be the subchannel power limited by PSR setting, e.g. using Equation 13 or Equation 14. In the example of FIG. 24, *Nₛ₁* = 4 and *Nₛ₂ =* 3 *or* 4. If the OBSS STA knows there is one punctured subchannel, then *Nₛ₂* = 3; otherwise *Nₛ₂* = 4.

Embodiments directed to PSR Disallow are described herein. When any one of the UL SR subfields is indicated as PSR_DISALLOW, there may be multiple solutions for setting the transmit power upper bound. For example, in some solutions, the transmit power upper bound may follow one or multiple of the solutions presented substantially in paragraphs above, by setting the PSR values on the subfield with PSD_DISALLOW to a low value, as shown by way of example in Equation 19: ${PSR}_{i} = - 100 dBm$ Eq. 19 where the UL SR *i*th subfield is indicated as PSR_DISALLOW. In some solutions, an OBSS STA may not perform SR operation on any subchannel if one of UL SR subfields is indicated as PSR_DISALLOW. In some solutions, an OBSS STA may select all or some of the subchannels whose corresponding UL SR subfields are not indicated as PSR_DISALLOW and follow one or a combination of solutions as set forth substantially in paragraphs above to set the upper bound of transmit power. For example, the 2nd SR subfield may be indicated as PSR_DISALLOW. The PSRT PPDU may be transmitted only on the fourth subchannel, but not the first, second and third subchannels, with the following transmit power constraint expressed as in Equation 20: ${X}_{{PWR}_{{STA}_{4}}} \leq \left({PSR}_{4}-{RPL}_{4}\right)$ Eq. 20

Embodiments directed to UL SR Field Design in Trigger Frames are described herein. In some embodiments, there may be one or more 8-bit spatial reuse subfields in the Special User Info field of EHT trigger frame and one or more 16-bit UL Spatial reuse subfields in the Common Info field.

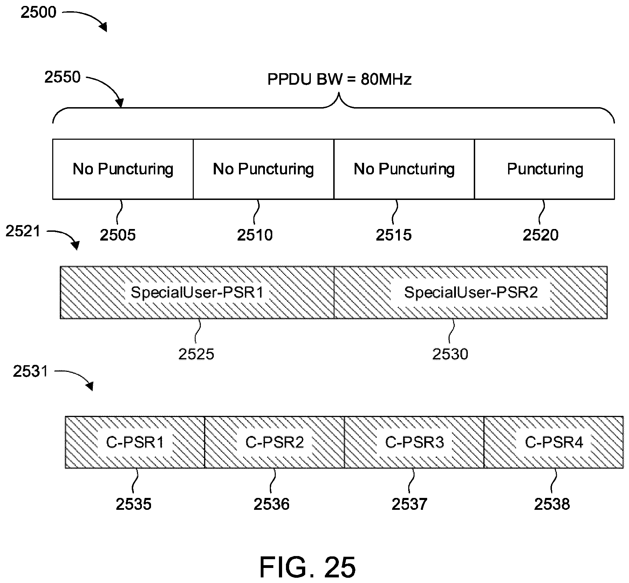

FIG. 25 is an example illustration of PSR in an EHT trigger frame 2500 when a punctured channel is present (C-PSRi: PSR_i in Common Info field).

In some implementation scenarios, OBSS HE STAs may obtain the PSR information from an EHT Trigger Frame and perform spatial reuse during an EHT TB PPDU transmission. One or more solutions by which an OBSS HE STA sets the 16-bit UL Spatial Reuse subfield to valid values, especially when the EHT trigger frame contains punctured channels, are described below.

As shown in the example provided in FIG. 25, in the case where the EHT trigger frame 2500 contains at least one punctured channel 2520, if SpecialUser-PSR2 2530 corresponds to the channels which contain punctured subchannels, then *C_PSR₄ = PSR_Disallow, C_PSR₃* = *SpeciaLUser_PSR₂,* or *C_PSR₃* = *C_PSR₄ = PSR_Disallow.*

For the subfield which does not correspond to the punctured subchannels, the interpretation may be: *C_{PSR₁} = C_{PSR₂} = SpecialUser_{PSR1}.* Alternatively, or additionally, if an HE STA detects any punctured channel in the trigger frame, it may simply set *C_PSR₁* = *C_PSR₂ = C_PSR₃ = C_PSR₄ = PSR_Disallow.*

Furthermore, for example, to simplify the PSR structure in EHT trigger frames and overhead, some solutions may consolidate the PSR subfields in the Special User Info field and the Common Info field. For instance, there may be no need to show the PSR subfields 2525, 2530 in the Special User Info field 2521. The PSR subfields2535-2538 in the Common Info field 2531 may represent the PSR subfields 2525, 2520 in the Special User Info field 2521. Two PSR subfields in the U-SIG field of EHT TB PPDU may be directly copied from PSR subfields 2535-2538 in the Common Info field 2531 of EHT trigger frame as follows: in a first Option, *U_SIG PSR* ₁ *= C_PSR₁* = *C_PSR₂,* and *U_SIG* PSR₂ = *C_PSR₃* = *C_PSR₄.* In a second option, *U_SIG PSR₁ = C_PSR₁* = *C_PSR₃,* and *U_SIG PSR₂ = C_PSR₂ = C_PSR₄.*

Embodiments directed to OBSS-PD power adjustment are described herein. If OBSS PD-based spatial reuse is used, a HE or EHT STA may maintain an OBSS PD level and may adjust the OBSS PD level in conjunction with its transmission and a value, PPDU_BW, derived from the received PPDU. The adjustment may be made in accordance with Equation 21: ${OBSS}_{{PD}_{level}} \leq max \left({OBSS}_{{PD}_{min}},min \left({OBSS}_{{PD}_{max}},{OBSSS}_{PDmin}+\left(\begin{matrix}{TX}_{{PWR}_{ref}} - \\ {TX}_{Pwr}\end{matrix}\right)\right)\right) + log 10 \left({N}_{20 MHz}\right)$ Eq. 21 where *N* _{20*MHz*} is the number of non-punctured 20MHz subchannels. *OBSS_{PDₘᵢₙ}* and *OBSS_{PDₘₐₓ}* are determined by if it is from the Non-SRG or SRG OBSS STA.

*TX_{PWR_{ref}}* and *TX_{Pwr}* may follow any of one or more definition set forth in 802.11 draft specifications, such as 802.11ax. If an HE/EHT STA is employing *OBSS_{PDₗₑᵥₑₗ}* as a threshold for determination of an IDLE medium condition prior to the reception of an PSRR PPDU, the intended transmit power of the next PSRT PPDU in the transmission queue as measured at the transmit antenna connector may be equal to or lower than the calculation as shown below: ${TX}_{{PWR}_{STA}} \leq min \left({TX}_{{PWR}_{{STA}_{PSRT}}}, {TX}_{{PWR}_{{STA}_{PDmax}}}\right)$ Eq. 21.5 where ${TX}_{{PWR}_{{STA}_{PSRT}}}$ may refer to the transmit power limitation for PSRT PPDU, which is defined substantially in paragraphs above. $\begin{matrix}{TX}_{{PWR}_{{STA}_{PDmax}}} = \\ \left\{\begin{matrix}Maxpower allowed by transmit power selection , if {OBSS}_{{PD}_{leve}} \leq {OBSS}_{{PD}_{min}} \\ {TXPWR}_{ref} - \left({OBSS}_{{PD}_{level}}-{OBSS}_{{PD}_{min}}\right) , if {OBSS}_{{PD}_{max}} \geq {OBSS}_{{PD}_{level}} \geq {OBSS}_{{PD}_{min}}\end{matrix}\right.\end{matrix}$ Eq. 22 *OBSS_{PDₗₑᵥₑₗ}* may be as defined in Eq. 11 above.

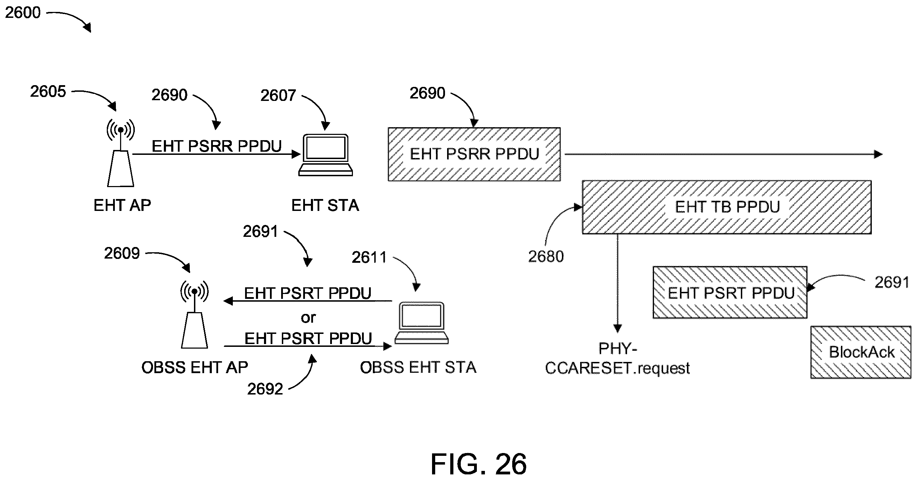

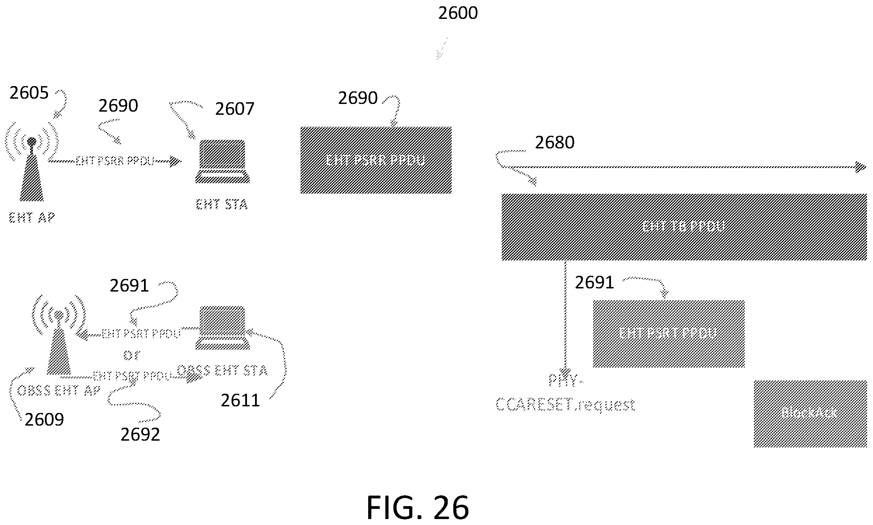

Embodiments directed to HE STA and EHT STA PSR Operating Procedures are described herein. There may be multiple scenarios in which a STA may detect one or more PSR opportunities and transmit PSRT PPDU(s) to its associated AP or to its associated STAs. Some exemplary scenarios 2600 -2900 are shown in FIG. 26, FIG. 27, FIG. 28, and FIG. 29 respectively. It should be noted that other PSR scenarios not shown in FIGS. 26-29 may be covered by the procedures and signaling described herein.

FIG. 26 depicts an example scenario 2600 involving EHT PSRR PPDU spatial reuse. For instance, the EHT PSRR PPDU 2690 may be transmitted by an EHT STA 2607, which may be an EHT AP 2605 or an EHT non-AP STA 2607. The OBSS EHT AP 2609 or OBSS EHT non-AP STA 2611 may identify a PSR opportunity and transmit a PSRT PPDU, which may be an EHT PSRT PPDU 2691, 2692.

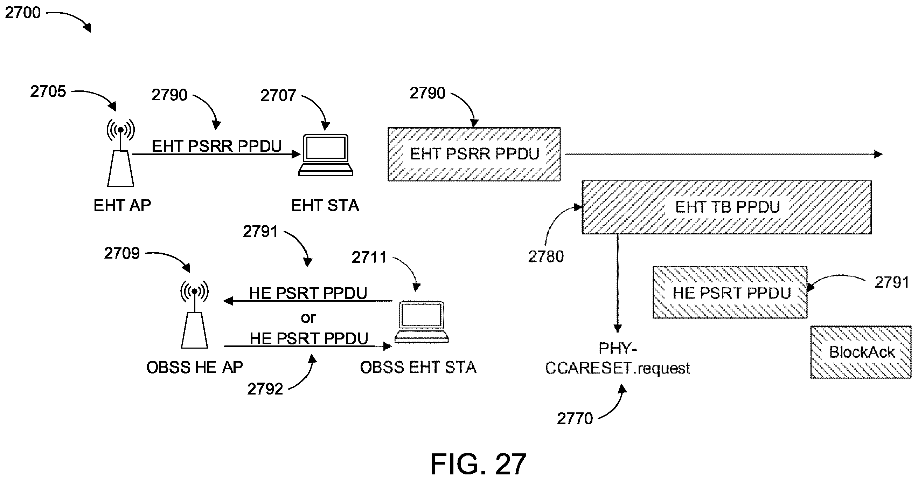

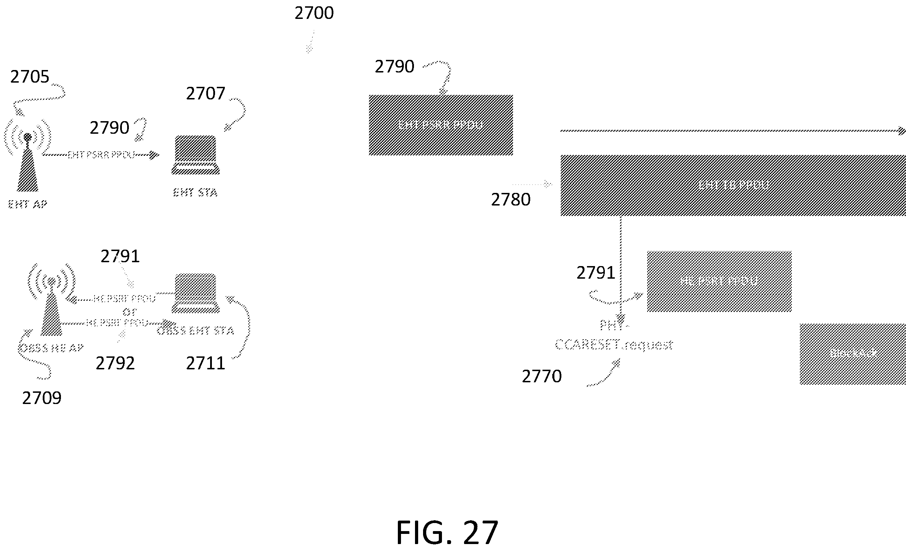

FIG. 27 depicts another example scenario 2700 involving EHT PSRR PPDU2790 spatial reuse. As shown in FIG. 27, an EHT OBSS STA 2711 may transmit a HE PSRT PPDU 2791 upon detection of a PSR opportunity provided by an EHT STA, which may be an EHT AP 2705 or an EHT non-AP STA 2707.

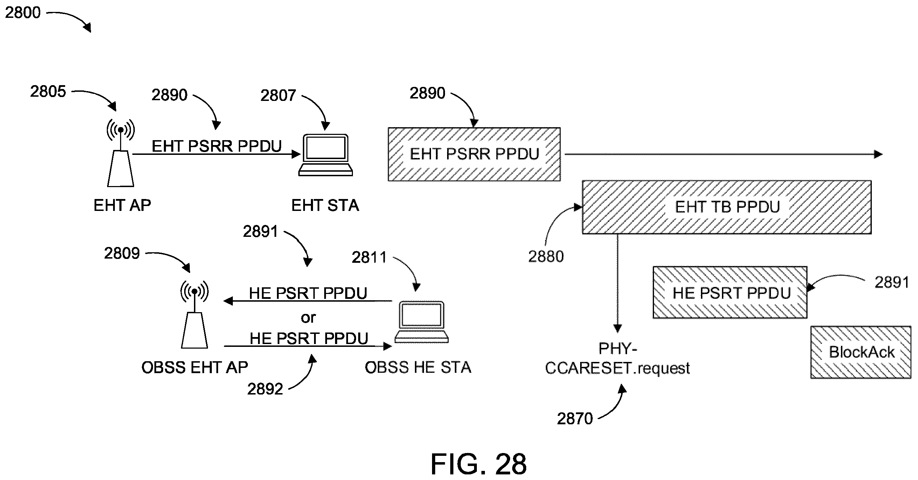

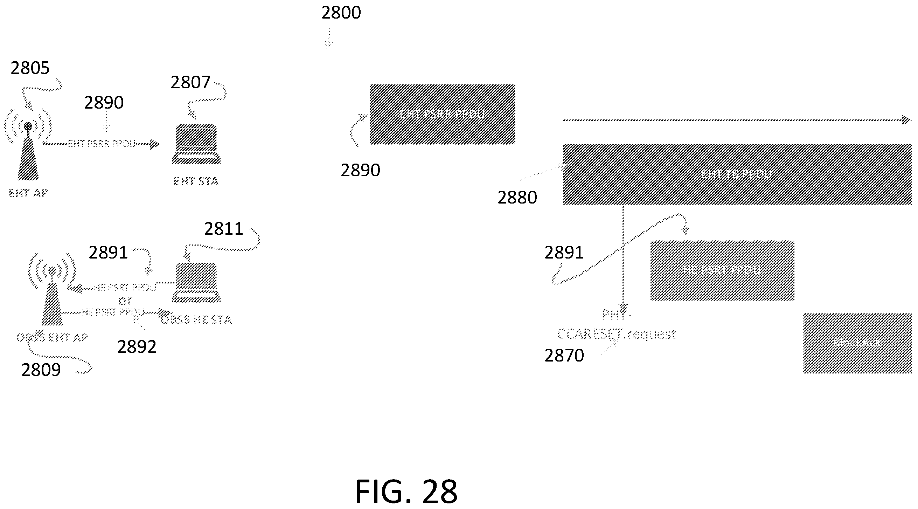

FIG. 28 depicts another example scenario 2800 involving EHT PSRR PPDU 2890 spatial reuse. As shown in FIG. 28, an HE OBSS STA 2811 or an EHT OBSS AP 2808 may transmit an HE PSRT PPDU 2891, 2892 upon detection of PSR opportunity provided by an EHT STA, which may be an EHT AP 2805 or an non-AP EHT STA 2807.

In the examples shown in FIG. 27 and/or FIG. 28, an EHT PSRR PPDU 2790, 2890 respectively may be transmitted by an EHT STA 2707, 2807 which may be an EHT AP 2705, 2805 or an EHT non-AP STA 2707, 2807. An OBSS AP (2709, 2809) or OBSS non-AP STA (2711, 2811), of which one may be an OBSS HE STA 2711, 2709 and/or the other may be an OBSS EHT STA (2711), may identify a PSR opportunity and transmit a PSRT PPDU, which may be an HE PSRT PPDU 2791, 2891 .

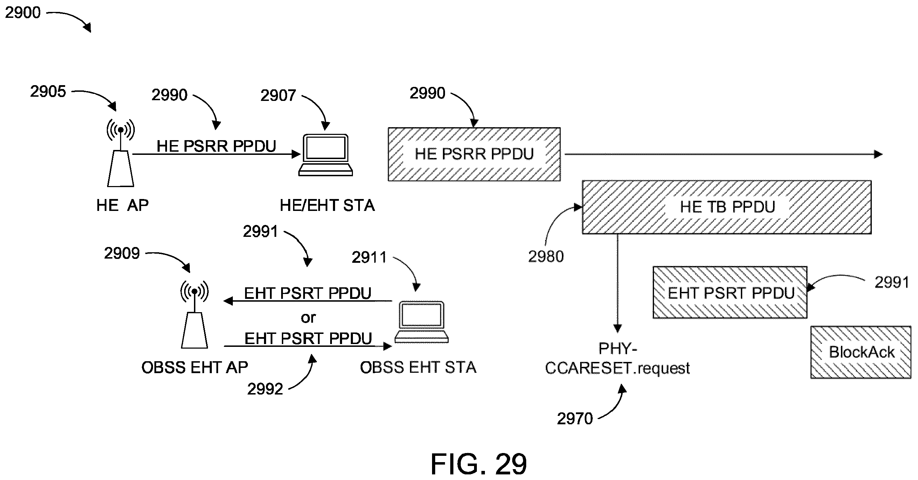

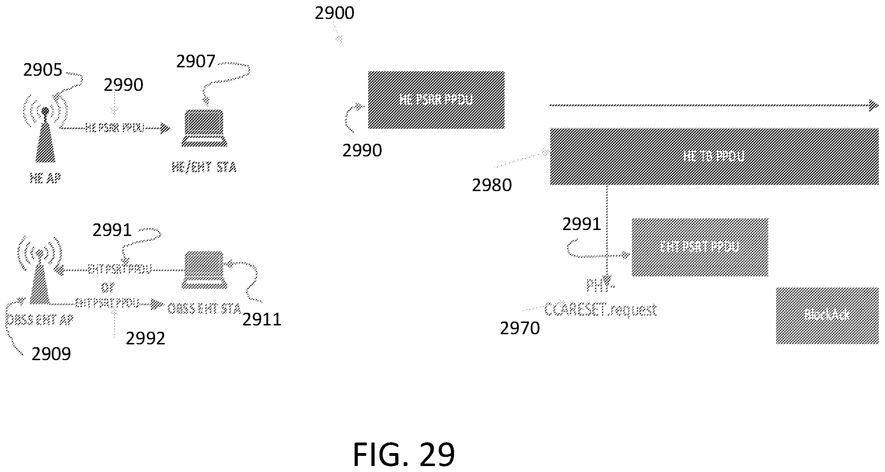

FIG. 29 depicts another exemplary scenario 2900 involving EHT PSRR PPDU spatial reuse. In the example shown in FIG. 29, an EHT PSRR PPDU 2990 may be transmitted by an EHT STA, which may be an EHT AP or an EHT non-AP STA. The OBSS EHT AP or EHT non-AP STA may identify a PSR opportunity and transmit an HE PSRT PPDU.

An HE STA my indicate PSR levels in either a trigger frame in the UL Spatial Reuse field or in the Spatial Reuse 1-4 subfields in the HE-SIG-A of an HE TB PPDU. For Bandwidth field indicating 20 MHz, 40 MHz, or 80 MHz, each of the PSR levels may apply to each 20 MHz channel averaged over the 20 MHz. For Bandwidth fields indicating 160/80+80 MHz, each of the PSR values may indicate the PSR levels for each of the 40 MHz channels averaged over 40 MHz.

An HE STA may support enhanced HE PSR operations, for example, if the HE STA indicates each of the four PSR levels either in the UL Spatial Reuse subfield in the Trigger frame format or in the Spatial Reuse subfields in the HE-SIG-A subfield in the HE TB PPDU in one or more of several ways, described substantially in following paragraphs. For Bandwidth fields indicating 20 MHz, 40 MHz, or 80 MHz, each of the PSR levels may apply to each 20 MHz channel averaged over the 20 MHz. For Bandwidth fields indicating 160/80+80 MHz, each of the PSR values may indicate the PSR levels for each of the 40 MHz channels averaged over 20 MHz.

An HE STA that supports enhanced HE PSR operations, which may have the MIB variable dot11 EnhancedPSROperation set to true or 1, may indicate its support for enhanced HE PSR operation in one or more bits in the HE MAC or PHY Capabilities field in the HE Capabilities element. Additionally, or alternatively, one or more bits may be used in the HE-SIG-A field or legacy preamble or MAC/PHY header to indicate that the HE STA supports enhanced HE PSR operation.

An EHT STA supporting PSR-based PSRT PPDU reception may indicate this support by setting the PSR Responder subfield to 1 in the EHT MAC Capabilities Information field in the EHT Capabilities element. An EHT STA supporting PSR-based PSRT PPDU transmission may indicate this support by setting the PSR-based SR support subfield to 1 in the EHT PHY Capabilities Information field in the EHT Capabilities element. An EHT STA indicating either support for PSR-based PSRT PPDU reception or PSR based PSRT PPDU transmission may imply that it supports enhanced HE PSR operations. Additionally, or alternatively, an EHT STA may indicate support for enhanced HE PSR value by setting one or more bits in the HE MAC or PHY Capabilities field in the HE Capabilities element. Additionally, or alternatively, one or more bits may be used in the trigger frame or in the HE-SIG-A field or EHT-SIG-A or legacy preamble or MAC/PHY header to indicate that the EHT STA supports enhanced HE PSR operation.

An HE STA that supports enhanced HE PSR operation may conduct a PSR procedure by performing one or more of the following steps.

The HE STA 2907 may identify that a received PSRR PPDU 2990 is received from an HE AP 2905 that does not support enhanced HE PSR operation, either by receiving an element in the beacon, probe responses from the HE AP, or other frames from that HE AP, and then identify a trigger frame or HE TB PPDU that are transmitted with the BSS Color of the BSS of the HE AP or BSSID of the BSS of the HE AP, or by identifying an indication in a received trigger frame or in a HE

In such cases, if the Bandwidth field in the trigger frame or HE TB PPDU indicates 160/80+80 MHz, each of the PSR values received in the PSRR PPDU or trigger frame or HE TB PPDU may indicate the PSR levels for each of the 40 MHz channels averaged over 40 MHz. In order to calculate any of the transmit power of any PSRT transmission, the HE STA may deduct a fraction of certain value, e.g., 3 dB, from the PSR values received for each of the 40 MHz or 20 MHz channels. Alternatively, the HE STA may calculate the transmit power upper bound for any PSRT transmission using half of the PSR values received for each of the 20 MHz channels.

The HE STA 2907 may identify that a received PSRR PPDU 2900 is received from an HE AP 2905 or HE STA that supports enhanced HE PSR operation, for example, by receiving an element in the beacon, probe responses from the HE AP 2905, or other frames from that HE AP 2905, and identifying a trigger frame and/or HE TB PPDU that is or are transmitted with the BSS Color of the BSS of the HE AP or BSSID of the BSS of the HE AP, and/or by identifying indication in a received trigger frame or in a HE TB PPDU.

In such cases, if the Bandwidth field in the trigger frame or HE TB PPDU indicating 160/80+80 MHz, each of the PSR values may indicate the PSR levels for each of the 40 MHz channels averaged over 20 MHz. In order to calculate any of the transmit power of any PSRT transmission, the HE STA 2907 may directly use the PSR values received for each of the 20 MHz channels.

The HE STA 2907 may then transmit a PSRT PPDU if the transmit power of a buffered PSRT PPDU is below the PSRT transmit power upper bound calculated using the received PSR values in a PSRR PPDU, such as an OBSS trigger frame or HE TB PPDU.

An EHT STA 2907, which may support enhanced HE PSR operation, may perform an HE or EHT PSR procedure by carrying out one or more of the following steps.

The EHT STA 2907 may identify that a received PSRR PPDU 2990 is received from an HE AP 2905 or a HE STA (not shown) that does not support enhanced HE PSR operation, either by receiving an element in the beacon, probe responses from the HE AP, or other frames from that HE AP, and then EHT STA 2907 may identify a trigger frame and/or HE TB PPDU that is or are transmitted with the BSS Color of the BSS of the HE AP 2905 or BSSID of the BSS of the HE AP 2905, or by identifying an indication in a received trigger frame or in a HE TB PPDU.

In such cases, if the Bandwidth field in the trigger frame or HE TB PPDU indicates 160/80+80 MHz, each of the PSR values received in a PSRR PPDU 2990, such as a trigger frame or HE TB PPDU, may indicate the PSR levels for each of the 40 MHz channels averaged over 40 MHz. In order to calculate any of the transmit power of any PSRT transmission, the EHT STA 2907 may action of a certain value, e.g., 3 dB, from the PSR values received for each of the 20 MHz or 40 MHz channels. Alternatively, or additionally, the EHT STA 2907may calculate the transmit power upper bound for any PSRT transmission using half of the PSR values received for each of the 20 MHz or 40 MHz channels.

The EHT STA 2907 may identify that a received PSRR PPDU 2990 is received from an HE AP 2905 or HE STA (not shown) that supports enhanced HE PSR operation, either by receiving an element in the beacon, probe responses from the HE AP 2905, or other frames from that HE AP 2905, and then may identify a trigger frame and/or HE TB PPDU that is transmitted with the BSS Color of the BSS of the HE AP 2905 or BSSID of the BSS of the HE AP 2905, or by identifying an indication in a received trigger frame or in a HE TB PPDU.

In such cases, if the Bandwidth field in the trigger frame or HE TB PPDU indicates 160/80+80 MHz, each of the PSR values may indicate the PSR levels for each of the 40 MHz channels averaged over 20 MHz. In order to calculate any of the transmit power of any PSRT transmission, the EHT STA 2907 may directly use the PSR values received for each of the 20 MHz channels.

A STA 2907, which may be an EHT STA, may perform an HE or EHT PSR procedure by performing one or more of the following steps.

The STA 2907 may identify that a received PSRR PPDU is received from an EHT AP 2905 either by receiving an element in the beacon, probe responses from the EHT AP, or other frames from that EHT AP, and then identifying a trigger frame or HE or EHT TB PPDU that are transmitted with the BSS Color of the BSS of the EHT AP or BSSID of the BSS of the EHT AP, or by identifying an indication in a received trigger frame such as Special User Info field, or in a HE or EHT TB PPDU.

In such cases, in order to calculate any of the transmit power of any PSRT transmission, the STA 2907 may use the received PSR values in either the UL Spatial field or in the Special User Info field in the trigger frame or in the U-SIG field of an EHT TB PPDU to calculate the transmit power upper bound of the PSRT transmissions for each of the 20 MHz channels.

If the STA 2907 detects that the EHT STA advertises any punctured channels, such as indicated by the Disallowed_Channels parameters in the beacons, probe responses or other frames, and has identified a PSRR PPDU which may be a trigger frame or EHT or HE TB PPDU that were from the same BSS of the EHT AP, such as the same BSS Color, or the BSSID of the BSS of the EHT AP in any received PPDUs, the STA 2907 may use the punctured channel information to calculate the PSRT transmission power upper bound for any PSRT transmissions by, for example, measuring the total received power of the PPDU averaged over the PSRR bandwidth adjusted by punctured channel information received in the Disallowed_Channels parameter.

If the STA 2907 detects a PSR opportunity in which channels are punctured, such as indicated by the punctured channel information contained in a received trigger frame (for example, by examining all User Info fields, or by examining any punctured channels information indicated in one or more subfields), or in a EHT TB PPDU, the STA may use the punctured channel information to calculate the PSRT transmission power upper bound for any PSRT transmissions by, for example, measuring the total received power of the PPDU averaged over the PSRR bandwidth adjusted by punctured channel information received in the trigger frame or EHT TB PPDU. The channel bandwidth adjustment may be in addition to the channel bandwidth adjustment used in the PSRT transmit power upper bound calculated using the Disallowed_Channel information.

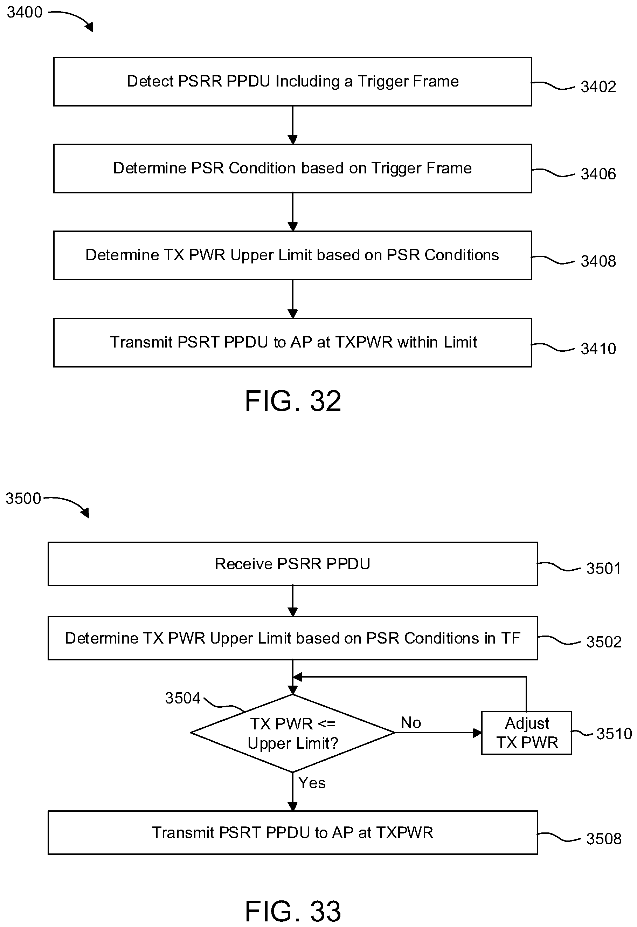

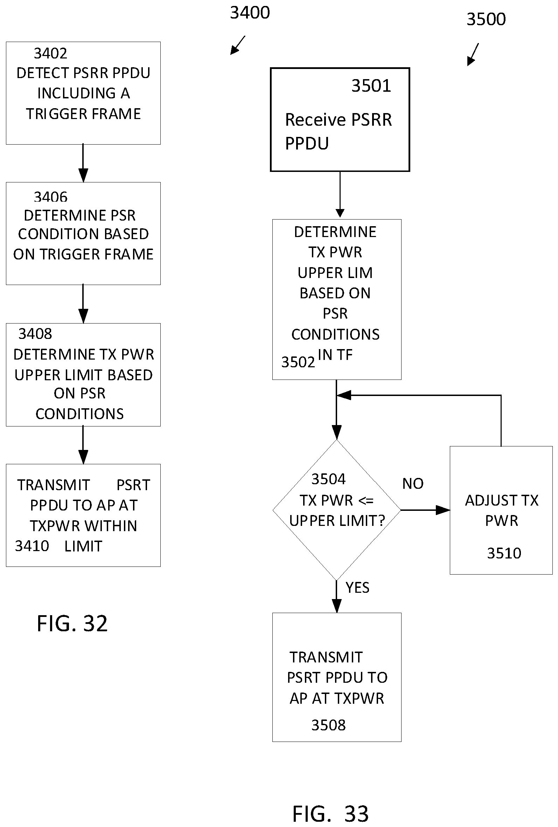

FIG. 32 is a flowchart illustrating a method 3400 for spatial re-use performed by an 802.11 Station (STA) 3020. At 3402 one or more STA receives from a first 802.11 Access Point (AP), a first parameterized spatial reuse reception (PSRR) Physical Layer Convergence Procedure (PLCP) Protocol Data Unit (PPDU) (1705). The PSRR PPDU (1705) may carry a trigger frame (TF) such as in either of the examples shown in FIG 17 or FIG. 25 that includes a plurality of spatial reuse (SR) subfields (e.g., 1730, 1735) corresponding to a plurality of subchannels (e.g., 1710, 1715, 1720, 1725). The first AP that transmits the PSRR PPDU (i.e. the TF) is not an AP that the STA 3020 is associated with.

At 3406 the STA determines any parameterized spatial reuse (PSR) conditions indicated in PSR subfields conveyed by the TF. At 3408 the STA determines, based on the indicated PSR conditions determined at 3406, a transmit power upper bound for transmitting a second PPDU to a second AP that the STA is associated with in. The transmit power upper bound is determined in accordance with the various methods described above. At 3410 the STA transmits the second PPDU, e.g., a parameterized spatial reuse transmission (PSRT) PPDU, to the second AP at a transmit power that is less than or equal to the upper limit determined at 3408.

FIG. 33 shows a method 3500 for transmitting, by a STA, a second PPDU, e.g., a PSRT PPDU, in response to the STA receiving a first PPDU, e.g., a PSRR PPDU including a trigger frame (TF). AT 3501, the STA receives a first PPDU, e.g., a PSRR PPDU including a trigger frame (TF), from a first AP that the STA is not associated with. AT 3502 the STA determines a transmit power upper limit based on SR conditions indicated in the TF. This determination may be performed per subchannel, as described above. At 3504 the STA determines whether an intended transmit power is less than or equal to the transmit power upper limit determined at 3502. If the intended transmit power is not less than or equal to the upper limit, at 3510 the STA adjusts the transmit power calculation and/or adjusts an intended modulation and coding scheme (MCS) and again determines at 3504 whether the adjusted transmit power is less than or equal to the upper power limit determined at 3502.The STA can perform the actions at 3504 and 3510 iteratively until the STA determines at 3504 that the intended transmit power is less than or equal to the upper limit determined at 3502. In that circumstance, at 3508 the STA transmits the second PPDU, e.g., a TB PSRT PPDU to a second AP that the STA is associated with at a transmit power that is below the upper limit as determined at 3504. It is noted that a STA may determine that a transmission is not possible because the transmission power upper bound may not be met.

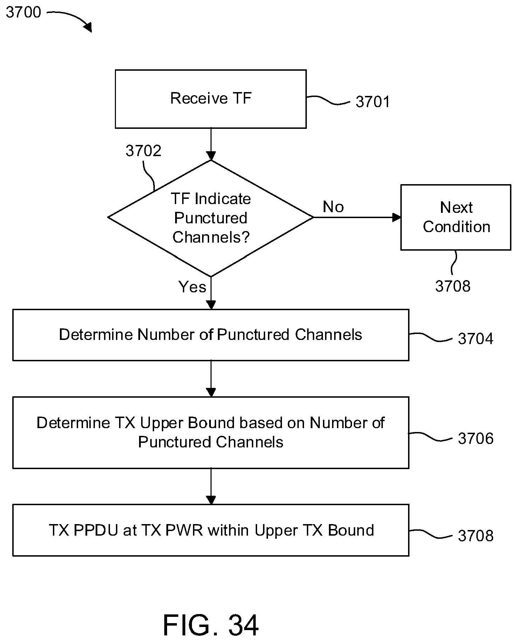

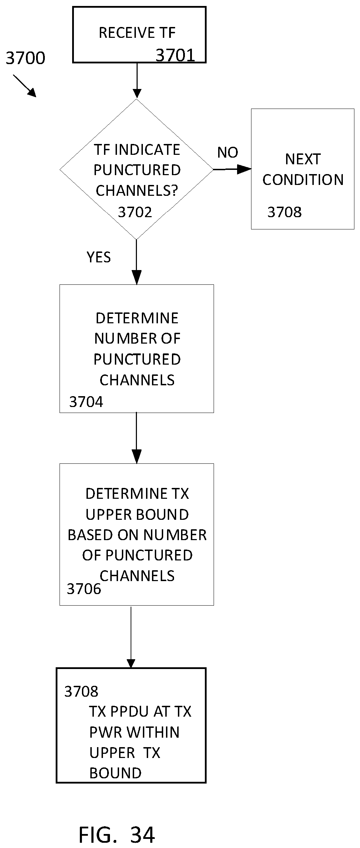

FIG. 34 shows a method 3700 for determining transmit power upper bound according an embodiment. At 3701 a STA receives a PSRR PPDU including a TF from a first AP. At 3702 the STA examines the punctured channel indicators in the TF (and/or other BSS level signaling transmitted before the TF) to determine whether the TF indicates any punctured channels. If not, the method ends, or alternatively continues to determine transmit power upper bound according to one or more of the other methods disclosed herein. If at 3702 the STA determines the TF indicates one or more punctured channels associated with the first AP, the STA can determine at 3704 a number of channels indicated as punctured. At 3706 the STA determines a transmit power upper bound for transmission to a second AP based on, at least, the number of punctured channels indicated at 3704 and/or the subchannel puncturing pattern. At 3708 the STA transmits a TB PSRT PPDU at a transmit power level that is less than or equal to the upper transmit power bound determined at 3706 to the second AP.

It is noted that FIGs. 32-34 describe a scenario where the PSRT PPDU is transmitted from a STA to a second AP. It is also possible that the STA that receives the PSRR PPDU is an AP STA. And thus the PSR transmission in the OBSS may be a downlink transmission from the AP to a STA.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A station, STA, configured for parameterized spatial reuse, PSR, the STA comprising:
a processor; and
a transceiver;
the processor and a transceiver configured to receive, using a first channel comprising a first set of subchannels including at least one first punctured subchannel and at least one first non-punctured subchannel, a first frame from a STA or an access point, AP, of an overlapping basic service set, OBSS, the first frame including at least one value indicative of at least one spatial reuse transmission power level associated with a respective one of the first set of subchannels; and
the processor and the transceiver configured to transmit a second frame over a second channel comprising a second set of subchannels including at least one second punctured subchannel and at least one second non-punctured subchannel, to another STA of a BSS with which the STA is associated, at a total transmit power determined using a transmit power upper bound,
the STA being **characterized in that** the transmit power upper bound is calculated based on:
a minimum spatial reuse transmission power level of the at least one spatial reuse transmission power level, and
a receive power level, RPL, measured for at least one first non-punctured subchannel of the first set of subchannels that overlap with at least one non-punctured subchannel of the second set of subchannels.

2. The STA of claim 1, wherein the received first frame is a trigger frame that triggers the transmission of the second frame by another STA of the OBSS.

3. The STA of claim 1, wherein the received first frame is a trigger based, TB, physical layer protocol data unit, PPU, transmitted by another STA of the OBSS in response to a trigger frame, and
wherein the at least one value indicative of at least one spatial reuse transmission power level is indicated by a signal, SIG, field included in the received TB PPDU.

4. The STA of claim 2, wherein the at least one value indicative of at least one spatial reuse transmission power level is indicated by a common info field of the received trigger frame.

5. The STA of claim 2, wherein the at least one value indicative of at least one spatial reuse transmission power level is indicated by a special user field of the received trigger frame.

6. The STA according to any one of claims 1-5, wherein the total transmit power is normalized by a number of the at least one second non-punctured subchannel in the second set of subchannels.

7. The STA according to any one of claims 1-6, wherein the STA of the BSS with which the STA is associated is an AP-STA.

8. The STA of claim 1, wherein the transmit power upper bound is calculated based on a ratio of a number of the at least one second non-punctured subchannel and a number of all subchannels in the second set of subchannels..

9. A method for parameterized spatial reuse, PSR, performed by a station, STA, the method comprising:
receiving, using a first channel comprising a first set of subchannels including at least one first punctured subchannel and at least one first non-punctured subchannel, a first frame from a STA or an access point, AP, of an overlapping basic service set, OBSS, the first frame including at least one value indicative of at least one spatial reuse transmission power level associated with a respective one of the first set of subchannels; and
transmitting a second frame, over a second channel comprising a second set of subchannels including at least one second punctured subchannel and at least one second non-punctured subchannel, to another STA of a BSS with which the STA is associated, at a total transmit power determined using a transmit power upper bound,
the method being **characterized in that** the transmit power upper bound is calculated based on:
a minimum spatial reuse transmission power level of the at least one spatial reuse transmission power level, and
a receive power level, RPL, measured for at least one first non-punctured subchannel of the first set of subchannels that overlap with the at least one non-punctured subchannel of the second set of subchannels.

10. The method of claim 9, wherein the received first frame is a trigger frame that triggers the transmission of the second frame by another STA of the OBSS.

11. The method of claim 9, wherein the received first frame is a trigger based, TB, physical layer protocol data unit, PPDU, transmitted by another STA of the OBSS in response to a trigger frame, and wherein the at least one value indicative of at least one spatial reuse transmission power level is indicated by a signal, SIG, field included in the received TB PPDU.

12. The method of claim 10, wherein the at least one value indicative of at least one spatial reuse transmission power level is indicated by a common info field of the received trigger frame.

13. The method of claim 10, wherein the at least one value indicative of at least one spatial reuse transmission power level is indicated by a special user field of the received trigger frame.

14. A method according to any one of claim 9-13, wherein the total transmit power is normalized by a number of the at least one second non-punctured subchannel in the second set of subchannels.

15. The method of claim 9, wherein the transmit power upper bound is calculated based on a ratio of a number of the at least one second non-punctured subchannel and a number of all subchannels in the second set of subchannels.

## Patentansprüche

1. Station (STA), die für eine parametrisierte räumliche Wiederverwendung (Parameterized Spatial Reuse, PSR) eingerichtet ist, wobei die STA umfasst:
einen Prozessor; und
einen Sender-Empfänger;
wobei der Prozessor und der Sender-Empfänger dazu eingerichtet sind, unter Verwendung eines ersten Kanals, der einen ersten Satz von Unterkanälen umfasst, der mindestens einen ersten punktierten Unterkanal und mindestens einen ersten nicht-punktierten Unterkanal enthält, einen ersten Frame von einer STA oder einem Zugangspunkt (Access Point, AP) eines überlappenden Basisdienstsatzes (Overlapping Basic Service Set, OBSS) zu empfangen, wobei der erste Frame mindestens einen Wert enthält, der mindestens einen Sendeleistungspegel für eine räumliche Wiederverwendung, der mit einem jeweiligen des ersten Satzes von Unterkanälen verknüpft ist, angibt; und
wobei der Prozessor und der Sender-Empfänger dazu eingerichtet sind, einen zweiten Frame über einen zweiten Kanal, der einen zweiten Satz von Unterkanälen umfasst, der mindestens einen zweiten punktierten Unterkanal und mindestens einen zweiten nicht-punktierten Unterkanal enthält, an eine andere STA eines BSS, mit dem die STA verknüpft ist, mit einer Gesamtsendeleistung, die unter Verwendung einer Sendeleistungsobergrenze bestimmt wird, zu senden,
wobei die STA **dadurch gekennzeichnet ist, dass** die Sendeleistungsobergrenze berechnet wird auf der Grundlage:
eines Mindestsendeleistungspegels für eine räumliche Wiederverwendung des mindestens einen Sendeleistungspegels für eine räumliche Wiederverwendung und
eines Empfangsleistungspegels (Receive Power Level, RPL), der für mindestens einen ersten nicht-punktierten Unterkanal des ersten Satzes von Unterkanälen gemessen wird, die mit mindestens einem nicht-punktierten Unterkanal des zweiten Satzes von Unterkanälen überlappen.

2. STA nach Anspruch 1, wobei der empfangene erste Frame ein Auslöser-Frame ist, der das Senden des zweiten Frames durch eine andere STA des OBSS auslöst.

3. STA nach Anspruch 1, wobei der empfangene erste Frame eine auslöserbasierte (Trigger Based, TB) Bitübertragungsschicht-Protokolldateneinheit (Physical layer Protocol data Unit, PPU) ist, die durch eine andere STA des OBSS in Reaktion auf einen Auslöser-Frame gesendet wird, und
wobei der mindestens eine Wert, der mindestens einen Sendeleistungspegel für eine räumliche Wiederverwendung angibt, durch ein Signalfeld (SIG-Feld) angegeben wird, das in der empfangenen TB-PPDU enthalten ist.

4. STA nach Anspruch 2, wobei der mindestens eine Wert, der mindestens einen Sendeleistungspegel für eine räumliche Wiederverwendung angibt, durch ein gemeinsames Info-Feld des empfangenen Auslöser-Frames angegeben wird.

5. STA nach Anspruch 2, wobei der mindestens eine Wert, der mindestens einen Sendeleistungspegel für eine räumliche Wiederverwendung angibt, durch ein spezielles Benutzerfeld des empfangenen Auslöser-Frames angegeben wird.

6. STA nach einem der Ansprüche 1-5, wobei die Gesamtsendeleistung durch eine Anzahl des mindestens einen zweiten nicht-punktierten Unterkanals in dem zweiten Satz von Unterkanälen normalisiert wird.

7. STA nach einem der Ansprüche 1-6, wobei die STA des BSS, mit dem die STA verknüpft ist, eine AP-STA ist.

8. STA nach Anspruch 1, wobei die Sendeleistungsobergrenze auf der Grundlage eines Verhältnisses einer Anzahl des mindestens einen zweiten nicht-punktierten Unterkanals und einer Anzahl aller Unterkanäle in dem zweiten Satz von Unterkanälen berechnet wird.

9. Verfahren zur parametrisierten räumlichen Wiederverwendung (Parameterized Spatial Reuse, PSR), das durch eine Station (STA) durchgeführt wird, wobei das Verfahren umfasst:
Empfangen, unter Verwendung eines ersten Kanals, der einen ersten Satz von Unterkanälen umfasst, der mindestens einen ersten punktierten Unterkanal und mindestens einen ersten nicht-punktierten Unterkanal enthält, eines ersten Frames von einer STA oder einem Zugangspunkt (Access Point, AP) eines überlappenden Basisdienstsatzes (Overlapping Basic Service Set, OBSS), wobei der erste Frame mindestens einen Wert enthält, der mindestens einen Sendeleistungspegel für eine räumliche Wiederverwendung, der mit einem jeweiligen des ersten Satzes von Unterkanälen verknüpft ist, angibt; und
Senden eines zweiten Frames über einen zweiten Kanal, der einen zweiten Satz von Unterkanälen umfasst, der mindestens einen zweiten punktierten Unterkanal und mindestens einen zweiten nicht-punktierten Unterkanal enthält, an eine andere STA eines BSS, mit dem die STA verknüpft ist, mit einer Gesamtsendeleistung, die unter Verwendung einer Sendeleistungsobergrenze bestimmt wird,
wobei das Verfahren **dadurch gekennzeichnet ist, dass** die Sendeleistungsobergrenze berechnet wird auf der Grundlage:
eines Mindestsendeleistungspegels für eine räumliche Wiederverwendung des mindestens einen Sendeleistungspegels für eine räumliche Wiederverwendung und
eines Empfangsleistungspegels (Receive Power Level, RPL), der für mindestens einen ersten nicht-punktierten Unterkanal des ersten Satzes von Unterkanälen gemessen wird, die mit dem mindestens einem nicht-punktierten Unterkanal des zweiten Satzes von Unterkanälen überlappen.

10. Verfahren nach Anspruch 9, wobei der empfangene erste Frame ein Auslöser-Frame ist, der das Senden des zweiten Frames durch eine andere STA des OBSS auslöst.

11. Verfahren nach Anspruch 9, wobei der empfangene erste Frame eine auslöserbasierte (Trigger Based, TB) Bitübertragungsschicht-Protokolldateneinheit (Physical layer Protocol data Unit, PPDU) ist, die durch eine andere STA des OBSS in Reaktion auf einen Auslöser-Frame gesendet wird, und
wobei der mindestens eine Wert, der mindestens einen Sendeleistungspegel für eine räumliche Wiederverwendung angibt, durch ein Signalfeld (SIG-Feld) angegeben wird, das in der empfangenen TB-PPDU enthalten ist.

12. Verfahren nach Anspruch 10, wobei der mindestens eine Wert, der mindestens einen Sendeleistungspegel für eine räumliche Wiederverwendung angibt, durch ein gemeinsames Info-Feld des empfangenen Auslöser-Frames angegeben wird.

13. Verfahren nach Anspruch 10, wobei der mindestens eine Wert, der mindestens einen Sendeleistungspegel für eine räumliche Wiederverwendung angibt, durch ein spezielles Benutzerfeld des empfangenen Auslöser-Frames angegeben wird.

14. Ein Verfahren einem der Ansprüche 9-5, wobei die Gesamtsendeleistung durch eine Anzahl des mindestens einen zweiten nicht-punktierten Unterkanals in dem zweiten Satz von Unterkanälen normalisiert wird.

15. Verfahren nach Anspruch 9, wobei die Sendeleistungsobergrenze auf der Grundlage eines Verhältnisses einer Anzahl des mindestens einen zweiten nicht-punktierten Unterkanals und einer Anzahl aller Unterkanäle in dem zweiten Satz von Unterkanälen berechnet wird.

## Revendications

1. Station, STA, configurée pour une réutilisation spatiale paramétrée, PSR, la STA comprenant :
un processeur ; et
un émetteur-récepteur ;
le processeur et un émetteur-récepteur étant configurés pour recevoir, à l'aide d'un premier canal comprenant un premier ensemble de sous-canaux incluant au moins un premier sous-canal poinçonné et au moins un premier sous-canal non poinçonné, une première trame depuis une STA ou un point d'accès, AP, d'un ensemble de services de base se chevauchant, OBSS, la première trame incluant au moins une valeur indiquant au moins un niveau de puissance de transmission de réutilisation spatiale associé à l'un respectif du premier ensemble de sous-canaux ; et
le processeur et l'émetteur-récepteur étant configurés pour transmettre une deuxième trame sur un deuxième canal comprenant un deuxième ensemble de sous-canaux incluant au moins un deuxième sous-canal poinçonné et au moins un deuxième sous-canal non poinçonné, à une autre STA d'un BSS auquel la STA est associée, à une puissance de transmission totale déterminée à l'aide d'une limite supérieure de puissance de transmission,
la STA étant **caractérisée en ce que** la limite supérieure de puissance de transmission est calculée sur la base de :
un niveau de puissance de transmission de réutilisation spatiale minimal de l'au moins un niveau de puissance de transmission de réutilisation spatiale, et
un niveau de puissance de réception, RPL, mesuré pour au moins un premier sous-canal non poinçonné du premier ensemble de sous-canaux chevauchant l'au moins un sous-canal non poinçonné du deuxième ensemble de sous-canaux.

2. STA selon la revendication 1, dans laquelle la première trame reçue est une trame de déclenchement qui déclenche la transmission de la deuxième trame par une autre STA de l'OBSS.

3. STA selon la revendication 1, dans laquelle la première trame reçue est une unité de données de protocole de couche physique, PPDU, basée sur déclenchement, TB, transmise par une autre STA de l'OBSS en réponse à une trame de déclenchement, et
dans laquelle l'au moins une valeur indiquant au moins un niveau de puissance de transmission de réutilisation spatiale est indiquée par un champ de signal, SIG, inclus dans la PPDU TB reçue.

4. STA selon la revendication 2, dans laquelle l'au moins une valeur indiquant au moins un niveau de puissance de transmission de réutilisation spatiale est indiquée par un champ d'informations commun de la trame de déclenchement reçue.

5. STA selon la revendication 2, dans laquelle l'au moins une valeur indiquant au moins un niveau de puissance de transmission de réutilisation spatiale est indiquée par un champ d'utilisateur spécial de la trame de déclenchement reçue.

6. STA selon l'une quelconque des revendications 1 à 5, dans laquelle la puissance de transmission totale est normalisée par un nombre de l'au moins un deuxième sous-canal non poinçonné dans le deuxième ensemble de sous-canaux.

7. STA selon l'une quelconque des revendications 1 à 6, dans laquelle la STA du BSS auquel la STA est associée est une AP-STA.

8. STA selon la revendication 1, dans laquelle la limite supérieure de puissance de transmission est calculée sur la base d'un rapport d'un nombre de l'au moins un deuxième sous-canal non poinçonné et d'un nombre de tous les sous-canaux dans le deuxième ensemble de sous-canaux.

9. Procédé de réutilisation spatiale paramétrée, PSR, réalisé par une station, STA, le procédé comprenant :
la réception, à l'aide d'un premier canal comprenant un premier ensemble de sous-canaux incluant au moins un premier sous-canal poinçonné et au moins un premier sous-canal non poinçonné, d'une première trame depuis une STA ou un point d'accès, AP, d'un ensemble de services de base se chevauchant, OBSS, la première trame incluant au moins une valeur indiquant au moins un niveau de puissance de transmission de réutilisation spatiale associé à l'un respectif du premier ensemble de sous-canaux ; et
la transmission d'une deuxième trame sur un deuxième canal comprenant un deuxième ensemble de sous-canaux incluant au moins un deuxième sous-canal poinçonné et au moins un deuxième sous-canal non poinçonné, à une autre STA d'un BSS auquel la STA est associée, à une puissance de transmission totale déterminée à l'aide d'une limite supérieure de puissance de transmission,
le procédé étant **caractérisé en ce que** la limite supérieure de puissance de transmission est calculée sur la base de :
un niveau de puissance de transmission de réutilisation spatiale minimal de l'au moins un niveau de puissance de transmission de réutilisation spatiale, et
un niveau de puissance de réception, RPL, mesuré pour au moins un premier sous-canal non poinçonné du premier ensemble de sous-canaux chevauchant l'au moins un sous-canal non poinçonné du deuxième ensemble de sous-canaux.

10. Procédé selon la revendication 9, dans lequel la première trame reçue est une trame de déclenchement qui déclenche la transmission de la deuxième trame par une autre STA de l'OBSS.

11. Procédé selon la revendication 9, dans lequel la première trame reçue est une unité de données de protocole de couche physique, PPDU, basée sur déclenchement, TB, transmise par une autre STA de l'OBSS en réponse à une trame de déclenchement, et
dans lequel l'au moins une valeur indiquant au moins un niveau de puissance de transmission de réutilisation spatiale est indiquée par un champ de signal, SIG, inclus dans la PPDU TB reçue.

12. Procédé selon la revendication 10, dans lequel l'au moins une valeur indiquant au moins un niveau de puissance de transmission de réutilisation spatiale est indiquée par un champ d'informations commun de la trame de déclenchement reçue.

13. Procédé selon la revendication 10, dans lequel l'au moins une valeur indiquant au moins un niveau de puissance de transmission de réutilisation spatiale est indiquée par un champ d'utilisateur spécial de la trame de déclenchement reçue.

14. Procédé selon l'une quelconque des revendications 9 à 13, dans lequel la puissance de transmission totale est normalisée par un nombre de l'au moins un deuxième sous-canal non poinçonné dans le deuxième ensemble de sous-canaux.

15. Procédé selon la revendication 9, dans lequel la limite supérieure de puissance de transmission est calculée sur la base d'un rapport d'un nombre de l'au moins un deuxième sous-canal non poinçonné et d'un nombre de tous les sous-canaux dans le deuxième ensemble de sous-canaux.
